# FASCICULE DE BREVET EUROPEEN

(11) **EP 3 278 149 B1**
(45) Date de publication et mention de la délivrance du brevet: **08.05.2019**
(21) Numéro de dépôt: 16718424.1
(22) Date de dépôt: 25.03.2016
(51) Int. Cl.: G02B 5/02, F21V 8/00, B60Q 3/00, B32B 17/10, G09F 13/18, G09F 21/04, B60Q 3/208, B60Q 3/43, B60Q 3/74, B60Q 9/00, B60Q 3/64, B60Q 3/47

(54) **VITRAGE LUMINEUX POUR BATIMENT, MOBILIER, VEHICULE DE TRANSPORT EN COMMUN**
BELEUCHTETE GLASSCHEIBE FÜR EIN GEBÄUDE, MÖBELSTÜCK ODER ÖFFENTLICHES VERKEHRSMITTEL
ILLUMINATED GLASS PANEL FOR A BUILDING, ITEM OF FURNITURE OR PUBLIC TRANSPORT VEHICLE

(30) Priorité: 03.04.2015 FR 1552909
(43) Date de publication de la demande: 07.02.2018
(73) Titulaire: Saint-Gobain Glass France, 92400 Courbevoie (FR)
(72) Inventeur: BERARD, Mathieu, 75019 Paris (FR); DUBOST, Brice, 92400 Courbevoie (FR)
(74) Mandataire: Saint-Gobain Recherche
(86) Numéro de dépôt international: PCT/FR2016/050687
(87) Numéro de publication internationale: WO 2016/156721

(56) Documents cités:
- EP-A1- 0 847 424
- WO-A1-2010/049638
- CN-U- 202 929 237

## Description

La présente invention est relative à un vitrage lumineux (ou « éclairant ») en particulier un vitrage lumineux à diodes électroluminescentes.

Les diodes électroluminescentes ou DEL (LED en anglais) assurent depuis quelques années l'éclairage décoratif. L'intérêt des diodes est leur longue durée de vie, leur efficacité lumineuse, leur robustesse, leur faible consommation énergétique et leur compacité, rendant les appareillages les employant davantage pérennes, et nécessitant un entretien réduit.

Plus récemment, les diodes électroluminescentes ont été utilisées pour réaliser des vitrages lumineux. La lumière émise par les diodes est introduite par la tranche dans le vitrage formant guide, la lumière étant extraite du vitrage par une couche diffusante sur le vitrage, dont la surface définit le motif lumineux, tel qu'un aplat émail contenant des particules diffusantes diélectriques. Cette couche diffusante est trop visible de l'utilisateur à l'état off (éteint). Ce vitrage lumineux présente alors un aspect très trouble et même le plus souvent opaque dans la zone de la couche diffusante. Le document WO 2010/049638 divulgue un vitrage lumineux selon l'art antérieur.

La présente invention a donc cherché à mettre au point un nouveau vitrage lumineux tout particulièrement pour bâtiment, mobilier dont équipement (de maison, réfrigéré, urbain etc), ou encore pour véhicule de transport en commun, en particulier à diodes électroluminescentes, préservant davantage la transparence à l'état off et même sans pénaliser trop fortement la luminance de ce vitrage à l'état on, en étant de préférence compatible avec les exigences industrielles (simplicité, facilité et rapidité de production, fiabilité,...).

A cet effet, la présente invention a pour objet un vitrage lumineux comprenant :
- un module verrier avec une tranche et des faces principales (externes) dénommées face A et face B, module verrier comportant au moins un premier vitrage en verre minéral ou organique, premier vitrage (transparent) comportant une première face principale et une deuxième face principale (et une première tranche) d'indice de réfraction n1 d'au moins 1,4 à 550nm (mieux dans l'ensemble du spectre visible) et de préférence inférieur à 1,65, et même inférieur à 1,55 ou même encore inférieur ou égal à 1,53 à 550nm (mieux dans l'ensemble du spectre visible), de préférence de 1,5 à 1,53 notamment premier vitrage minéral transparent de préférence clair et même extraclair, et même trempé (nu ou déjà revêtu), notamment le module verrier (et même le vitrage lumineux) présentant (dans tout ou partie du clair de vitre) une transmission lumineuse (TL) non nulle (préservation de la vision au travers du module verrier, du vitrage lumineux, au moins dans le clair de vitre),
- une source de lumière (visible), de préférence en périphérie du module verrier, de préférence un ensemble de diodes électroluminescentes (en rangée(s) sur un premier support à circuit imprimé comme un support dit PCB -pour « printed circuit board » en anglais-), notamment une barrette le long de la tranche du premier vitrage, ou encore source de lumière qui comprend une fibre optique extractrice avec source primaire de lumière (diode(s)),
   la source de lumière étant couplée optiquement au module verrier de préférence par la tranche du module verrier voire par la face A ou la face B (en bordure), notamment couplée optiquement au premier vitrage de préférence par la première tranche voire par la première ou deuxième face principale (en bordure) notamment avec un logement des diodes, le module verrier (notamment le premier vitrage) formant ainsi guide de lumière émise par la source de lumière
- des moyens d'extraction de lumière de la lumière guidée pour former une zone diffusante (lumineuse à l'état on) de largeur d'au moins 1cm, et même d'au moins 5cm (largeur inférieure ou égale à la longueur, largeur naturellement à distinguer de l'épaisseur, longueur de préférence supérieure à 5cm et même à 10cm), moyens d'extraction de lumière comportant (voire constitués de) une couche diffusante comprenant des particules diélectriques diffusantes (espacées entre elles) et liées par une matrice transparente (incolore de préférence) d'indice de réfraction n2 au moins égal à n1 ou tel que n1-n2 est d'au plus 0,15, même d'au plus 0,1 ou mieux d'au plus 0,05 à 550nm (mieux dans l'ensemble du spectre visible) et encore mieux d'au plus 0,02 à 550nm (mieux dans l'ensemble du spectre visible), couche diffusante associée à l'une des première ou deuxième faces (en contact optique avec l'une des première ou deuxième faces), de préférence couche diffusante en contact direct avec l'une des première ou deuxième faces et même directement déposée sur l'une des première ou deuxième faces.

En outre, les particules diffusantes sont en majorité (en nombre) des microparticules espacées entre elles et comprenant une coquille en un matériau diélectrique (et transparent) et en contact avec la matrice transparente, coquille entourant un coeur d'indice de réfraction n3 d'au plus 1,15 à 550nm (mieux dans l'ensemble du spectre visible), mieux d'au plus 1,05 à 550nm (mieux dans l'ensemble du spectre visible), coeur de plus grande dimension dite D₃ dans une gamme allant de 5µm à 200µm, les microparticules ayant une plus grande dimension dite D' inférieure à 2D₃.

Le contraste d'indices de réfraction entre le coeur et la matrice (entre n3 et n2) permet une diffusion de la lumière guidée plus efficace que les particules diffusantes pleines usuelles en limitant fortement le recours à la diffusion multiple qui altère rapidement les propriétés en transmission.

L'extraction lumineuse étant plus efficace avec les microparticules selon l'invention, il est ainsi possible de choisir une faible concentration, nettement plus faible à une couche diffusante classique en obtenant tout de même un motif suffisamment lumineux. Ainsi, une plus faible partie des rayons lumineux traversant le module verrier est affectée lorsque l'utilisateur observe le vitrage éteint (état off). La couche diffusante peut assombrir le premier vitrage ou former un très léger voile blanc selon les conditions d'éclairage/de lumière ambiantes.

Une solution avec les couches diffusantes de l'art antérieur pour préserver la vision au travers du vitrage -conférant une transparence globale- consisterait à une réduction de la densité des zones diffusantes typiquement sous forme de réseau de points de taille et espacement appropriés. Ainsi la plupart des rayons traversant les faces du vitrage seraient peu diffusés mais ceci est au détriment de la luminance.

La couche diffusante selon l'invention peut être simplement une pleine couche plutôt qu'un tel réseau de points subcentimétriques.

La première face correspond à la face A (par convention).

De préférence au moins 80%, mieux au moins 90% du nombre total de particules diffusantes et même de l'ensemble de particules diffusantes et non diffusantes de la couche diffusante sont des microparticules selon l'invention.

En l'absence de précision dans la présente demande, un indice de réfraction selon l'invention est indiqué à 550nm.

Selon l'invention le premier vitrage est un vitrage simple (ou monolithique) comme une feuille de verre minérale (de préférence en verre clair et même extraclair) ou une feuille plastique (comme un polycarbonate).

Lorsque le module verrier est un vitrage simple (seulement avec le premier vitrage), on préfère qu'il soit plan (non bombé) et même trempé (chimiquement ou mieux thermiquement).

On peut souhaiter préserver la transparence pour voir au travers du vitrage lumineux et/ou pour préserver d'autres fonctionnalités comme une fonction miroir ou une fonction décorative (motif(s) coloré(s), fond continu blanc ou coloré...).

Selon l'invention lorsque le module verrier est un vitrage feuilleté comportant premier vitrage/intercalaire de feuilletage/ deuxième vitrage, le deuxième vitrage du module verrier est un vitrage simple (ou monolithique) comme une feuille de verre minérale transparente (de préférence en verre clair et même extraclair). On préfère en outre que le vitrage feuilleté soit plan (non bombé) en particulier pour le bâtiment.

La forme du coeur des microparticules est de préférence choisie parmi une sphère, une sphéroïde, voire une forme cylindrique ou oblongue.

D3 correspond généralement au diamètre du coeur (de forme sensiblement sphérique).

De préférence également, la dimension moyenne du coeur dite D₃ₘ est dans une gamme allant de 5µm à 200µm correspondant généralement au diamètre moyen du coeur (de forme sensiblement sphérique).

Les microparticules (et mieux toutes les particules diffusantes) sont espacées entre elles, de préférence au moins ne formant pas d'amas de microparticules et même encore plus préférentiellement individuelles.

D' est choisie inférieur à 2D₃ (donc inférieur à 400µm et de préférence inférieur à 200µm) car cela permet de choisir un faible taux de couverture de microparticules dans une matrice transparente en préservant aisément la transparence.

De préférence, la dimension moyenne de la particule dite D'ₘ (correspondant généralement au diamètre moyen de la particule (de forme sensiblement sphérique) est inférieur à 2D₃ et même à 2D₃ₘ.

On préfère aussi que l'épaisseur de la coquille dite E₄ (notamment coquille minérale) soit d'au moins 100nm et mieux d'au moins 500nm pour une meilleure tenue mécanique, en particulier pour des microparticules creuses.

De préférence, la couche diffusante est :
- exempte de particules individuelles ayant une plus grande dimension (et même de préférence une dimension moyenne) d'au moins 400µm (et même d'au moins 200µm) ou au moins en quantité suffisamment faible pour ne pas augmenter le flou significativement
- et/ou exempte d'agrégats de particules ayant une plus grande dimension d'au moins 400µm (et même d'au moins 200µm) ou au moins en quantité suffisamment faible pour ne pas augmenter le flou significativement.

Dans un mode de réalisation préféré, ladite plus grande dimension D₃ (et même la dimension moyenne du coeur) est dans la gamme allant de 20µm à 100µm et mieux la plus petite dimension dite I₃ du coeur est telle que I₃>D₃/10 ou mieux encore I₃>D₃/5.

Dans un mode de réalisation préféré, le taux de couverture des microparticules, de préférence creuses, (de préférence formant au moins 80% ou au moins 90% ou 95% des particules diffusantes et même constituant les particules diffusantes) est d'au plus 20% et de préférence d'au plus 10% et mieux d'au moins 1%.

Pratiquement pour mesurer le taux de couverture on réalise au microscope optique des observations visuelles de dessus de la couche diffusante et on détermine la surface totale occupée par les microparticules (somme des surfaces occupées par les microparticules) -microparticules visibles du dessus car la matrice est transparente-, ce calcul étant valide que les microparticules soient en monocouche ou réparties dans le volume de la couche diffusante (à différentes hauteurs). On définit une surface plutôt qu'un volume occupée par les microparticules par simplicité.

Pour déterminer la surface occupée par les microparticules, on choisit de préférence une surface de référence de 1cm² (dans le plan du vitrage). Plusieurs images au microscope optique peuvent être nécessaires pour former cette surface de référence prise dans une région quelconque de la zone diffusante. On peut répéter l'évaluation dans plusieurs régions réparties sur la zone diffusante pour un calcul encore plus représentatif du taux de couverture.

De préférence pour garantir l'homogénéité des propriétés optiques de la couche diffusante, le taux de couverture de microparticules de préférence creuses est d'au plus 20% et de préférence d'au plus 10% et mieux d'au moins 1%, taux mesuré dans cette surface de référence prise dans une région quelconque et mieux mesuré dans une pluralité de régions pour couvrir au moins 50% de la surface de la zone diffusante.

Plus n3 est bas, plus le taux de couverture peut être abaissé pour un même niveau de performances lumineuses.

Dans un mode de réalisation préféré, les microparticules (de préférence formant au moins 80% ou au moins 90% des particules diffusantes et même constituant les particules diffusantes) sont creuses pour créer la différence d'indice de réfraction (n3-n2) la plus grande possible avec la matrice. Et de préférence ce sont des microparticules creuses minérales (la majorité et même au moins 80% ou même au moins 90% ou même toutes les microparticules), en particulier en oxyde métallique ou mieux en verre minéral ou en silice. De préférence, la majorité et même au moins 80% ou même au moins 90% ou au moins 95% des microparticules ou encore toutes les microparticules sont creuses, minérales et en verre minéral ou en silice.

Les microsphères creuses en coquille de verre sont disponibles commercialement, fabriquées en grandes quantités à bas coût, utilisées à ce jour pour alléger des matériaux de construction cimentaires.

La coquille est de préférence dénuée de porosité ouverte notamment pour maintenir l'air dans le coeur. La coquille peut être indifféremment de surface externe lisse ou rugueuse.

De préférence le matériau diélectrique de la coquille est d'indice de réfraction n4 tel que n4>n3 et en valeur absolue n4-n2 d'au plus 0,2 à 550nm (et mieux dans l'ensemble du spectre visible) et même d'au plus 0,1 à 550nm (et mieux dans l'ensemble du spectre visible).

Dans un mode de réalisation préféré, notamment pour une meilleure tenue au traitement thermique éventuel, la coquille des microparticules est minérale, de préférence en verre minéral, ou en silice, notamment sol-gel, ou encore en oxyde métallique tel que oxyde de titane, de zirconium, d'aluminium. Et même également le coeur peut être solide, minéral par exemple un coeur en silice poreuse (sol gel) et une coquille en silice dense (sol gel).

De préférence, la majorité des microparticules (voire au moins 80% ou au moins 90% des microparticules, de préférence constituant les particules diffusantes) sont individuelles, plutôt que formés par des agrégats de particules. Par simplicité, les microparticules (monoparticule de préférence) peuvent être de préférence monodisperses en taille et de matériau identique. Il suffit donc de contrôler la dispersion des (mono)particules lors de la formation de la couche diffusante.

L'épaisseur de la couche diffusante peut être d'au moins 20µm, d'au moins 0,2mm et même (au moins) millimétrique. L'épaisseur de la couche diffusante peut être supérieure à la plus grande dimension des microparticules.

Les microparticules (au moins la majorité voire au moins 90% des microparticules, de préférence constituant les particules diffusantes) peuvent :
- être dispersées dans la matrice (ou donc avec une coquille entièrement entourée de la matrice) notamment incorporées dans la matrice avant application en couche,
- ou avec un ou des points de contact avec la première ou deuxième face du premier vitrage et liées par la matrice,
- ou sur des points de colle (transparente) sur la première ou deuxième face du premier vitrage et liées par la matrice
- ou sur des points de colle sur la face d'un intercalaire de feuilletage et liées par la matrice.

Les microparticules (au moins la majorité voire au moins 90% des microparticules, de préférence constituant les particules diffusantes) peuvent être en saillie de la matrice, à l'air (notamment pour un module verrier avec un unique vitrage) avec ou sans un ou des points de contact avec la première face du premier vitrage.

La matrice transparente, notamment déposée par voie liquide, peut être en matériau choisi parmi un liant polymérique comme une peinture notamment une laque, une résine.

En particulier, la couche diffusante peut comporter une couche liant les microparticules en matériau choisi parmi un liant organique, en particulier à base d'acrylate, de silicone, d'époxy, de silicone-époxy ou de polyuréthane, ou un liant minéral comme un oxyde métallique et/ou de silice, notamment sol-gel, comme un oxyde de silicium, de silicium et de titane, un oxyde de titane, un oxyde de zirconium, un oxyde de titane et zirconium. Et/ou la couche diffusante peut comporter une couche de polyvinylbutyral (PVB) ou d'éthylène vinylacétate (EVA) ou encore du polyuréthane (PU) liant les microparticules, qui sont des matériaux d'intercalaire de feuilletage thermoplastiques les plus utilisés.

La matrice transparente peut être définie par une transmission lumineuse (intrinsèque) d'au moins 50% mieux d'au moins 80% et même d'au moins 90% qui se déduit de la transmission lumineuse de l'ensemble premier vitrage matrice transparente (hors microparticules) et de la transmission lumineuse du premier vitrage seul.

Les microparticules de préférence creuses peuvent être dans un film polymérique transparent par exemple polyéthylène téréphtalate (PET), en polycarbonate (PC), ou polyméthacrylate de méthyle (PMMA), film de préférence submillimétrique ou millimétrique, mieux d'au plus 1mm. Ce film polymérique transparent peut être rapporté par colle optique au premier vitrage (en particulier module verrier avec un seul vitrage simple).

La matrice peut être une couche d'un matériau donné ou une multicouche, par exemple la première couche est un liant organique comme une résine (déposée par voie liquide) d'épaisseur inférieure aux microparticules, et la deuxième couche couvrant les microparticules est un intercalaire de feuilletage thermoplastique (notamment EVA ou PVB), le module verrier étant alors un vitrage feuilleté utilisant un deuxième vitrage.

Les microparticules, de préférence creuses, peuvent être liées par une matrice qui est un intercalaire de feuilletage thermoplastique de préférence EVA ou PVB, intercalaire de préférence submillimétrique ou millimétrique mieux d'au plus 1mm. Lorsque l'intercalaire de feuilletage est d'indice de réfraction nf inférieur à n1 (comme le PVB) on préfère que les microparticules soient en contact avec le premier vitrage pour que le plus de rayons possibles atteignent les microparticules.

On souhaite que la couche diffusante soit la plus invisible, discrète possible. Notre perception visuelle peut distinguer nettement deux phénomènes différents: la diffusion aux petits angles et sur un domaine angulaire élargi.

La lumière est diffusée uniformément dans toutes les directions. Ceci provoque une atténuation de contraste et une image d'apparence trouble et terne. La norme ASTMD 1003 définit le voile ou flou comme étant la quantité de lumière qui dévie en moyenne de plus de 2,5° par rapport au faisceau de lumière incident - exprimée en pourcentage.

La lumière est diffusée dans un angle étroit avec haute concentration. Cet effet décrit très bien comment de très fins détails peuvent être vus à travers l'échantillon. La qualité de la netteté d'image (clarity en anglais) doit être déterminée dans un angle inférieur à 2,5 degrés.

Le flou et la netteté d'image sont de préférence mesurés par un Hazemeter (tel que BYK-Gardner Haze-Gard Plus) de préférence selon la norme ASTDM D1003 (sans compensation) ou bien ISO 13468 (avec compensation) appliquée pour un premier vitrage en verre organique (polycarbonate notamment) comme en verre minéral.

On préfère réaliser les mesures avant un éventuel feuilletage. Par exemple l'illuminant est placé en face opposée à la face du premier vitrage porteuse de la couche diffusante.

De préférence, la couche diffusante est directement sur la première ou deuxième face du premier vitrage et :
- le flou, dit H₁, à l'état off de l'ensemble premier vitrage et couche diffusante est d'au plus 10% et mieux d'au plus 5% et même au plus 2%
- et mieux la netteté d'image, à l'état off de l'ensemble premier vitrage et couche diffusante est d'au moins 90% et mieux d'au moins 95%.

Les solutions d'émail diffusant actuelles présentent un flou de plus de 80%.

On peut considérer que le flou, dit H'₁, à l'état off de l'ensemble premier vitrage et d'une couche en la matrice transparente sans les microparticules est d'au plus 1%.

On choisit de préférence un premier vitrage en verre minéral, notamment clair et même extraclair.

De préférence, il n'y a pas de différence colorimétrique notable entre l'ensemble premier vitrage avec la couche diffusante et le premier vitrage sans la couche diffusante notamment :
- la différence entre L1 et L2 est d'au plus 20 et même d'au plus 10
- et même:
   - la différence entre a1* et a2* est d'au plus 10 et même d'au plus 5
   - la différence entre b1* et b2* est d'au plus 10 et même d'au plus 5.

Dans une configuration spécifique, la couche diffusante n'est pas directement sur la deuxième face mais associée via l'intercalaire de feuilletage. La source de lumière est couplée optiquement avec le premier vitrage (par la première tranche), l'intercalaire de feuilletage est clair ou incolore et d'indice de réfraction nf tel que en valeur absolue n1-nf est d'au plus 0,15 mieux d'au plus 0,05. Le deuxième vitrage est teinté (et/ou avec élément diffusant externe) et comporte sur sa face de feuilletage la couche diffusante. Dans ce cas, on peut aussi définir le flou, dit H₁, à l'état off de l'ensemble deuxième vitrage teinté et couche diffusante d'au plus 10% et mieux d'au plus 5% et même au plus 2% et mieux également la netteté d'image, à l'état off de l'ensemble deuxième vitrage teinté et couche diffusante est d'au moins 90% et mieux d'au moins 95%.

Et de préférence la luminance est d'au moins 1cd/m² et même d'au moins 10cd/m².

Le vitrage lumineux peut donc former dans une configuration un vitrage simple clair ou extraclair plan et trempé, le premier vitrage étant ainsi clair ou extraclair plan et trempé.

Lorsque le module est un vitrage monolithique, le guidage se fait uniquement dans le premier vitrage par réflexion totale interne aux première et deuxième faces correspondant respectivement aux faces A et face B.

Dans un mode de réalisation préféré, la source de lumière (de préférence des diodes sur support PCB) est couplée au premier vitrage (mieux à sa tranche) et le module verrier peut être un vitrage feuilleté comportant ledit premier vitrage en verre minéral de préférence clair même extraclair, côté deuxième face une intercalaire de feuilletage en matière polymérique, de préférence thermoplastique (en EVA ou en PVB) de préférence clair et un deuxième vitrage en verre minéral, de préférence clair même extraclair.

Pour les applications bâtiment, on peut préférer l'EVA. Pour les applications transport en commun on peut préférer le PVB.

On peut ajouter d'autres fonctions au vitrage lumineux avec un module verrier qui est un vitrage feuilleté comme par exemple un dispositif électrocommandable:
- une fonction pour préserver l'intimité : un dispositif à cristaux liquides, avec la couche diffusante sur la première ou la deuxième face et la couche de cristaux liquides (entre deux électrodes) entre deux intercalaires de feuilletages (EVA ou PVB)
- une fonction pour un passage clair à obscur : un dispositif à valve optique (SPD pour suspended particle device en anglais) avec la couche diffusante sur la première ou la deuxième face et la couche active (entre deux électrodes) entre deux intercalaires de feuilletages (EVA ou PVB)
- une fonction de teinte : un dispositif électrochrome.

Lorsque le module verrier est un vitrage feuilleté avec un intercalaire de feuilletage teinté et/ou un deuxième vitrage teinté et/ou avec un élément absorbant ou diffusant, on favorise le guidage dans le premier vitrage par réflexion totale interne aux première et deuxième faces.

L'intercalaire de feuilletage peut en outre être teinté surtout s'il ne forme pas tout ou partie de la matrice transparente. L'intercalaire de feuilletage (PVB) peut être clair mais avec une zone (limitée) teintée, comme une bande (bande de PVB ou d'EVA teintée). On préfère que le couplage optique soit avec une tranche distincte de celle le plus proche de la bande teintée. Par exemple, la zone teintée est absente de la zone du module verrier entre la tranche de couplage optique et la couche diffusante.

Si nécessaire, le deuxième vitrage peut avoir un élément réflecteur ou opaque 'décor etc) en regard de la zone diffusante. Plus largement, pour un module verrier feuilleté ou monolithique, la couche diffusante sur la deuxième face peut être revêtue d'une couche réfléchissante ou opaque (décor etc).

Lorsque le module verrier est un vitrage feuilleté avec un deuxième vitrage clair et/ou un intercalaire de feuilletage clair (non teinté), on peut positionner la source de lumière librement sur la tranche du module même si on préfère que la source soit en regard du premier vitrage et que la couche diffusante sur l'une des première ou deuxième faces.

Lorsque le module verrier est un vitrage feuilleté avec un deuxième vitrage et/ou un intercalaire de feuilletage teinté et/ou avec un élément absorbant ou diffusant, on favorise le guidage dans le premier vitrage par réflexion totale interne aux première et deuxième faces.

Si on souhaite une propagation du plus grand nombre de rayons dans le premier vitrage dans ce cas :
- la source de lumière est en face de la première tranche du premier vitrage, de préférence en centrant la face émettrice des diodes électroluminescentes à la première tranche,
- la couche diffusante est directement sur la première ou la deuxième face du premier vitrage
- de préférence l'indice de réfraction nf de l'intercalaire de feuilletage est inférieur à n1 d'au moins 0,01 à 550nm, comme le PVB surtout si distinct de la de la matrice transparente (sur la couche diffusante) .

Alternativement ou cumulativement, lorsque le module verrier est un vitrage feuilleté avec un intercalaire de feuilletage teinté et/ou un deuxième vitrage teinté et/ou avec un élément absorbant ou diffusant, une couche (formant isolateur optique) d'indice de réfraction d'au plus 1,3 et même d'au plus 1,2 à 550nm (mieux dans l'ensemble du visible) peut être sur la deuxième face (côté feuilletage) opposée à la première face, comme une couche de silice poreuse (sol gel). La couche diffusante est sur la première ou côté deuxième face, cette couche formant isolateur optique étant adjacente de la zone diffusante si la couche diffusante est sur cette deuxième face.

De préférence, la couche diffusante est à l'intérieur du vitrage feuilleté, en particulier sur la deuxième face (de feuilletage) du premier vitrage et non pas en première face car elle est alors protégée de l'environnement extérieur (abrasion, salissure) et le module verrier conserve l'aspect parfaitement lisse d'un vitrage sans couche diffusante.

Si la couche diffusante est sur la face de feuilletage du deuxième vitrage, on préfère qu'en valeur absolue nf-n1<0,15 et mieux d'au plus 0,05 pour que le maximum de rayons atteignent la couche diffusante.

S'il s'agit d'un vitrage feuilleté on peut ainsi avoir les configurations suivantes :
- premier vitrage (couplé à la source de lumière)/ isolateur optique/intercalaire de feuilletage/couche décorative/deuxième vitrage,
- premier vitrage (couplé à la source de lumière)/ isolateur optique/ intercalaire de feuilletage/ /deuxième vitrage/ couche décorative,
- premier vitrage (couplé à la source de lumière)/ isolateur optique discontinu adjacent avec couche diffusante / intercalaire de feuilletage/ /deuxième vitrage
- premier vitrage (couplé à la source de lumière)/ isolateur optique discontinu/ intercalaire de feuilletage/couche diffusante en regard de la ou des discontinuités /deuxième vitrage.

Ainsi, la source de lumière (de préférence des diodes sur support PCB) peut être couplée au premier vitrage (mieux à sa tranche) et un isolateur optique d'indice de réfraction inférieur à n1 est sur la deuxième face, notamment une couche de silice poreuse (sol-gel) d'indice de réfraction d'au plus 1,3 même d'au plus 1,2 et mieux d'épaisseur d'au moins 200nm même d'au moins 400nm et de préférence d'au plus 1µm. Cette couche de silice poreuse sol-gel est décrite dans la demande WO2008/059170 en particulier en figure 11. La couche diffusante est sur la première face ou du côté de la deuxième face et lorsque la couche diffusante est côté de la deuxième face la couche de silice poreuse présente une ou des discontinuités. Et éventuellement le module verrier est un vitrage feuilleté comportant ledit premier vitrage en verre minéral de préférence clair voire extraclair, et coté deuxième face une intercalaire de feuilletage en matière polymérique de préférence thermoplastique éventuellement teinté (surtout si couche diffusante sur deuxième face ou première face) et un deuxième vitrage en verre minéral éventuellement comportant une couche dite décorative absorbante et/ou diffusante (colorée etc), notamment opaque ou même un miroir.

La couche de silice poreuse peut être de part et d'autre de la couche diffusante ou même juste dans la zone en amont entre le bord de couplage et le bord de la couche diffusante le plus proche.

La couche de silice poreuse peut aussi être utile dans le cas d'un module verrier en vitrage simple. La couche diffusante peut être sur la première face (face A), peut être utile sous une couche teintée, absorbante ou diffusante par exemple une couche décorative telle que la couche de peinture du produit Planilaque ou Décolaque de la Demanderesse, avec une large gamme de teintes disponibles (chaudes, froides métallisées) ou une couche d'émail.

Alternativement, dans le cas d'un module verrier en vitrage simple, la couche de silice poreuse est discontinue et la couche diffusante est dans la ou les discontinuités sur la deuxième face.

On préfère également choisir un intercalaire de feuilletage (clair ou teinté) le moins flou possible c'est-à-dire d'au plus 1,5% et même d'au plus 1%.

Le module verrier peut être alternativement un vitrage feuilleté comportant ledit premier vitrage en verre minéral de préférence clair ou extraclair, une intercalaire de feuilletage en matière polymérique de préférence thermoplastique de préférence clair (EVA ou PVB), et un deuxième vitrage en verre minéral notamment clair ou extraclair, et de préférence les microparticules sont liées par la matière polymérique de l'intercalaire de feuilletage formant tout ou partie de la matrice transparente. On choisit de préférence des coquilles minérales, et même des microparticules creuses, comme des billes de silice ou de verre creuses.

De préférence, la couche diffusante est à l'intérieur du vitrage feuilleté, en particulier sur la deuxième face (de feuilletage) du premier vitrage et non pas en première face ou face A car elle est alors protégée de l'environnement extérieur (abrasion, salissure) et le module verrier conserve l'aspect parfaitement lisse d'un vitrage sans couche diffusante.

Le vitrage lumineux peut former un vitrage de bâtiment, de mobilier ou de transport en commun (ferroviaire, aquatique ou terrestre) notamment :
- pour bâtiment : fenêtre, (façade, toiture) notamment porte fenêtre, ou en intérieur cloison, porte...
- meuble réfrigéré commercial
- meuble d'aménagement intérieur
- mobilier urbain, de jardin
- ou encore pour véhicule de transport en commun terrestre (bus, car, autocar), aquatique (bateau) ou ferroviaire (train, métro, tramway).

En position montée dans le véhicule de transport en commun (ferroviaire, terrestre ou aquatique comme un bateau de croisière), dans le cas d'un vitrage latéral simple la face A est la face côté extérieur classiquement dénommée face F1 et la couche diffusante est de préférence sur la deuxième face opposée à la face A donc face la plus interne face F2.

En position montée dans le véhicule de transport en commun (de préférence terrestre ou aquatique), le vitrage lumineux peut être un toit feuilleté (éclairage interne souhaité) la face A est la face côté intérieur du véhicule de transport en commun classiquement dénommée face F4 et la couche diffusante est de préférence sur la deuxième face dite F3. Et dans le cas d'un toit en vitrage simple (verre, polycarbonate etc) la face A est la face côté intérieur du véhicule de transport en commun classiquement dénommée face F2 et la couche diffusante est de préférence sur la première face F2.

En position montée dans le véhicule de transport en commun (de préférence terrestre ou ferroviaire), le vitrage lumineux peut être un pare-brise feuilleté. Pour une signalisation lumineuse au conducteur (détection anti collisions pour un bus, car, autocar, distance de sécurité trop faible, ou présence sur la voie pour un train, tramway, métro), la face A est la face côté intérieur classiquement dénommée face F4 la couche diffusante est de préférence sur le premier vitrage qui le vitrage le plus interne en particulier en face F3.

En position montée dans le véhicule de transport en commun (terrestre, ferroviaire ou aquatique), le vitrage lumineux peut être un vitrage latéral feuilleté. Pour un éclairage interne, la face A est de préférence la face côté intérieur classiquement dénommée face F4. La couche diffusante est alors de préférence sur le premier vitrage qui est le vitrage le plus interne en particulier en face F3. On peut placer un élément opaque ou réflecteur en regard de la couche diffusante sur le deuxième vitrage ou même sur la couche diffusante (en s'éloignant du premier vitrage). Sinon pour une signalisation lumineuse vers l'extérieur (signal de secours etc), la face A est la face côté extérieur classiquement dénommée face F1, et la couche diffusante est de préférence sur le premier vitrage qui est le vitrage le plus externe, en particulier en face F2.

Si on rajoute un isolateur optique (détaillé ultérieurement) entre le premier vitrage et le deuxième vitrage, on peut (indépendamment) avoir un éclairage intérieur (guidage dans le premier vitrage couplé à la première source de lumière) et une signalisation extérieure avec une autre zone diffusante -de couleur et/ou motif distinct, intermittente...- intérieure (guidage dans le deuxième vitrage couplé à une deuxième source de lumière).

Dans le cadre de l'aménagement intérieur (particuliers, bureau, magasin), le vitrage lumineux peut être un vitrage feuilleté en particulier formant :
- une cloison,
- un miroir notamment partiel (couche diffusante dans une zone autre que zone miroir)
- un vitrage dit décoratif comportant une couche décorative opaque et/ou colorée sur le deuxième vitrage, vitrage avec de préférence un isolateur optique comme précité, la couche diffusante étant sur le premier vitrage et la source de lumière couplée à la tranche du premier vitrage
- un plateau de table
- un totem (dans un magasin).

La couche diffusante est alors de préférence sur le premier vitrage côté face de feuilletage (pour la protéger).

Dans le cadre de l'aménagement intérieur (particuliers, bureau, magasin) ou de mobilier extérieur (marché, foire..), le vitrage lumineux peut être un vitrage monolithique en particulier formant :
- une cloison,
- un vitrage de douche, d'un meuble
- un plateau de table
- un totem
- un miroir notamment partiel (couche diffusante dans une zone autre que zone miroir)
- un vitrage dit décoratif comportant une couche décorative absorbante et/ou diffusante (crédence de cuisine etc), avec un isolateur optique comme précité, la couche diffusante étant sur le premier vitrage et la source de lumière couplée à la tranche du premier vitrage
- un vitrage de mobilier urbain, comme un abribus,
- un vitrage de balustrade,
- un vitrage de présentoir, notamment réfrigéré (comptoir alimentaire etc)
- une vitrine (façade commerciale), une étagère (de meuble, même de réfrigérateur),
- un vitrage de serre.

Le vitrage lumineux peut être un vitrage isolant (de préférence double vitrage) donc comporter un vitrage supplémentaire avec des troisième et quatrième faces principales, la troisième face, la plus interne, étant espacée du module verrier (formant le plus souvent un vitrage simple) par une lame de gaz (air ou gaz neutre comme de l'argon). En périphérie de la troisième face est agencé un premier joint polymérique en cadre et en contact avec le module verrier, de préférence la première face ou la deuxième face du premier vitrage.

Le vitrage isolant peut même former un triple vitrage et peut comporter en outre un autre vitrage supplémentaire avec des cinquième et sixième faces principales, la cinquième face, la plus interne, étant espacée du vitrage supplémentaire par une autre lame de gaz (air ou gaz neutre comme de l'argon). Et en périphérie de la cinquième face est agencé un deuxième joint polymérique en cadre.

Le vitrage lumineux isolant peut être un vitrage latéral de train, tramway, métro, une porte de meuble réfrigéré (congélateur inclus) notamment d'armoire réfrigérée commerciale (de magasins), une fenêtre notamment de toit, une porte fenêtre.

On connaît ainsi un vitrage isolant destiné à l'ouvrant d'une enceinte réfrigérée, enceinte dans laquelle sont exposés des produits froids ou surgelés, tels que des produits alimentaires ou boissons, ou tous autres produits nécessitant une conservation dans le froid, par exemple des produits pharmaceutiques ou même des fleurs. Un revêtement bas émissif est de préférence sur le vitrage le plus intérieur et sur la face orienté espace interne. On préfère que le revêtement bas émissif soit sur le vitrage supplémentaire.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal (porte à l'horizontale) qui est vitré pour permettre l'observation du contenu.

Dans le cadre d'une application intérieure de bâtiment, en particulier un équipement réfrigéré professionnel comme une porte de meuble réfrigéré vertical, on préférera un double vitrage. La face A est la face côté extérieur de l'équipement. La couche diffusante est sur le premier vitrage de préférence qui est le plus extérieur de l'équipement. La couche diffusante peut être côté lame de gaz (pour la protéger).

Sinon, en position montée dans le véhicule ferroviaire (train etc), le vitrage lumineux peut être vitrage latéral formant un double vitrage (et même un double vitrage incluant un vitrage feuilleté), ou même d'un triple vitrage.

Pour un éclairage interne, la face A est la face côté intérieur du véhicule ferroviaire et la couche diffusante est sur le premier vitrage de préférence qui est le plus interne. En particulier le module verrier est un vitrage monolithique côté intérieur et le vitrage supplémentaire est coté extérieur et est feuilleté à un autre vitrage pour plus de sécurité (vis-à-vis de choc venant de l'extérieur). Sinon pour une signalisation lumineuse (alerte etc) la face A est alors la face côté extérieur du véhicule ferroviaire et la couche diffusante est de préférence sur le premier vitrage qui est vitrage le plus externe. La couche diffusante peut être côté lame de gaz (pour la protéger). On peut avoir (indépendamment) à la fois sur le vitrage le plus intérieur une zone lumineuse (donc la source de lumière couplée au premier vitrage et la couche diffusante sur le premier vitrage) et sur le vitrage supplémentaire une autre zone lumineuse (donc une autre source de lumière couplée au vitrage supplémentaire (éventuellement feuilleté) et une autre couche diffusante associée ou sur le vitrage supplémentaire. Par exemple (à des instants différents), l'éclairage intérieur est blanc et la signalisation extérieure rouge et intermittente.

Dans le cadre d'une application en façade de bâtiment, en particulier une fenêtre (toit compris) ou une porte fenêtre (coulissantes, battantes..), on préférera un double ou même triple vitrage. Pour un éclairage interne, la face A est la face côté intérieur du bâtiment. La couche diffusante est sur le premier vitrage de préférence qui est le plus interne. Sinon pour un éclairage vers l'extérieur (éclairage de bâtiment etc) la face A est alors la face côté extérieur du bâtiment, la couche diffusante est sur le premier vitrage qui est le vitrage le plus externe. La couche diffusante peut être côté lame de gaz (pour la protéger). On peut avoir (indépendamment) à la fois sur le vitrage le plus intérieur une zone lumineuse (donc la source de lumière couplée au premier vitrage et la couche diffusante sur le premier vitrage) et sur le vitrage supplémentaire une autre zone lumineuse (donc une autre source de lumière couplée au vitrage supplémentaire (éventuellement feuilleté) et une autre couche diffusante associée ou sur le vitrage supplémentaire). Par exemple (à des instants différents), l'éclairage intérieur est blanc et l'éclairage externe est coloré et intermittent.

Le vitrage lumineux (vitrage simple, feuilleté, vitrage isolant) peut comporter un profilé de montage du vitrage, par exemple métallique (aluminium etc) en regard de la tranche du vitrage lumineux et même sur au moins l'une des faces principales externes du vitrage lumineux, la source de lumière (diodes) étant dans le volume entre le profilé de montage et la tranche du module verrier, le profilé comportant une âme en regard de la tranche du module verrier, de préférence une première aile (section en L) et même une deuxième aile (section en U).

Le profilé de montage peut être chaussé ou fixé par collage ou par tout autre moyen au vitrage.

Selon l'invention, la seconde aile du profilé de montage peut être mobile ou amovible, procurant un accès à l'intérieur du profilé à tout moment, en particulier ultérieurement à l'installation (cloison...). Le profilé de montage peut être pourvu d'une pare close.

La source de lumière, en particulier le support PCB peut être fixé (par sa face arrière) au module verrier par collage ou espacé du module verrier et fixé sur le profilé de montage ou à une pièce dite interne de préférence métallique (dissipateur thermique) s'étendant en largeur de préférence sans gêner la ou les ailes du profilé de montage.

La pièce interne peut être fixée au profilé de montage ou posée dessus ou sur une cale (en position de montage sur un bord vertical du module verrier).

Dans le cas du vitrage isolant, le profilé de montage et/ou la pièce interne ne crée pas de pont thermique de préférence. Un joint d'étanchéité peut être entre le profilé de montage (comme un encadrement de menuiserie pour former une fenêtre) et les faces principales externes du vitrage lumineux.

En particulier, le profilé de montage (encadrement) de la porte de meuble réfrigéré (ou d'une fenêtre) est de préférence associé au vitrage isolant sans créer de pont thermique. Le profilé de montage comprend de préférence:
- une première partie (coudée, section en L ...) notamment métallique, en regard du bord d'injection et dépassant sur la face la plus exterieure du module verrier, fixée au vitrage isolant de préférence par une colle dite de montage (8), la colle de montage éventuelle étant absente de l'espace entre la source de lumière et le bord d'injection
- et une deuxième partie, notamment isolante thermique, de préférence polymérique, solidaire par des moyens de collage avec la première partie, en regard de la tranche du vitrage supplémentaire et dépassant éventuellement sur la face la plus interne du module verrier (collée à la face interne).

L'une des parties est métallique (de préférence première partie, coté usager) l'autre étant isolante thermique de préférence polymérique de préférence deuxième partie, coté enceinte). La première ou deuxième partie peut avoir une zone creuse.

De préférence, la zone diffusante est dans le clair de vitre notamment lorsque le vitrage comportant un profilé de montage couvrant la périphérie des faces A et/ou B et la zone diffusante est espacée d'au moins 2cm de la tranche du module verrier (du premier vitrage) couplée avec la source de lumière.

La zone diffusante peut couvrir moins de 50% de la surface du premier vitrage lorsqu'il est nécessaire de préserver un clair de vitre ou une fonction donnée (miroir, décoratif) à l'état on. Le module verrier peut comprendre une deuxième source de lumière identique, notamment à diodes électroluminescentes, en périphérie et à l'opposé de la première source de lumière (tranche opposée). En particulier, pour un vitrage rectangulaire ou carré (plus largement à coins) la première source peut être sur une première tranche longitudinale (respectivement latérale) et la deuxième source peut être sur une deuxième tranche longitudinale (respectivement latérale).

Le module verrier peut comprendre une pluralité de zones diffusantes de taille et/ou formes identiques ou distinctes. Les moyens d'extraction peuvent donc couvrir une partie ou la totalité d'une ou plusieurs faces selon l'éclairage ou l'effet recherché (sous forme de bandes disposées en périphérie d'une des faces pour former un cadre lumineux, des logos ou de motifs, etc.).

Les moyens d'extraction peuvent être en plusieurs morceaux, par exemple des motifs, identiques ou distincts, continus ou discontinus, et peuvent être de toute forme géométrique (rectangulaire, carré, en triangle, circulaire, ovale, etc.), et peuvent former un dessin, un signalétique (flèche, lettre...). On peut facilement obtenir une délimitation des zones contrôlable et reproductible industriellement. Le vitrage peut ainsi comprendre plusieurs zones d'extraction (couches diffusantes) pour former plusieurs zones lumineuses sur le vitrage.

Des moyens d'extraction supplémentaires peuvent le cas échéant être prévus, par exemple une face du premier vitrage peut aussi être matée, sablée, sérigraphiée etc, ou l'épaisseur du verre peut également être gravée, etc.

L'éclairage/l'extraction peut être ajustée pour un éclairage d'ambiance, de lecture, une signalisation lumineuse, un éclairage de nuit ou d'affichage d'informations de toutes natures, de type dessin, logo, signalisation alphanumérique ou autres signalétiques, et peut aussi être activée par télécommande. La lumière peut être continue et/ou par intermittence, monochromatique et/ou plurichromatique, blanche, etc.

Le premier vitrage (et le deuxième vitrage en cas de vitrage feuilleté) peut être tout type de verre plat, (éventuellement bombé par les procédés de bombage connus de l'homme du métier, lorsqu'il s'agit de revêtir des surfaces courbes). Il s'agit de verres monolithiques, c'est-à-dire composés d'une seule feuille de verre minérale, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le premier vitrage peut être parallélépipédique, avec des feuilles ou des faces principales rectangulaires, carrées ou même de toute autre forme (ronde, ovale, polygonale). Il peut être de différentes tailles, et notamment de grande taille, par exemple de surface supérieure à 0,5 ou 1m². Son épaisseur est généralement d'au moins 1mm, en particulier de 2 à 20mm, par exemple entre 3 et 5mm.

Le verre minéral présentant de multiples atouts, en particulier une bonne résistance à la chaleur (il peut ainsi être proche des sources de rayonnements, par exemple des diodes, malgré le fait qu'elles constituent des points chauds ; il répond également aux besoins des normes de sécurité au feu) et une bonne résistance mécanique (il présente ainsi une facilité de nettoyage et résiste à la rayure).

Le premier vitrage peut (selon le rendu esthétique, l'effet optique souhaité, la destination du vitrage, etc.) être un verre clair (transmission lumineuse TL supérieure ou égale à 90% pour une épaisseur de 4 mm), par exemple un verre de composition standard sodocalcique comme le Planilux® de la société Saint-Gobain Glass, ou extra-clair (T_{L} supérieure ou égale à 91,5% pour une épaisseur de 4 mm), par exemple un verre silico-sodo-calcique avec moins de 0,05% de Fe III ou de Fe₂O₃ comme le verre Diamant® de Saint-Gobain Glass, ou Optiwhite™ de Pilkington, ou B270® de Schott, ou d'autre composition décrite dans le document WO04/025334.

Le verre du premier vitrage peut être neutre (sans coloration), ou (légèrement) teinté ou coloré (verre VENUS ou TSA de la société Saint-Gobain Glass, etc) ; avoir subi un traitement chimique ou thermique du type durcissement, recuit ou trempe (pour une meilleure résistance mécanique notamment) ou bombage, et est généralement obtenu par procédé float.

Le premier vitrage -et même le module verrier- peut présenter cette ou ces propriétés « de manière intrinsèque», c'est-à-dire nu, sans la présence d'un quelconque revêtement, ou être un substrat transparent qui est revêtu sur au moins une surface (autre que sa tranche) d'un revêtement constitué d'une ou de plusieurs couches et présentant cette ou ces propriétés intégrées sur l'équivalent de la totalité de sa surface. La transmission lumineuse est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le vitrage lumineux est de préférence avec un clair de vitre (préservation de la transparence) de sorte d'un objet peut être vu derrière. Le clair de vitre est éventuellement adjacent ou encadré par émail ou autre couche de masquage ou couche miroir ou couche décorative. Le vitrage lumineux (le module verrier notamment, feuilleté ou non) peut présenter une transmission lumineuse TL non nulle.

Pour un toit de véhicule de transport en commun (de préférence feuilleté, notamment de train), on préfère une transmission lumineuse TL non nulle et même d'au moins 0,5% ou d'au moins 2% et d'au plus 10% et même d'au plus 8%. Pour un pare-brise de véhicule de transport en commun (de préférence feuilleté, notamment de train) on préfère une transmission lumineuse TL non nulle et d'au moins 70%. Pour un double ou triple vitrage (fenêtre, porte de meuble réfrigéré notamment d'armoire réfrigérée etc) on préfère une transmission lumineuse TL non nulle et d'au moins 60% et même d'au moins 70%. Ces valeurs de TL peuvent être dans une zone avec la couche diffusante et/ou adjacente de la couche diffusante (et dans le clair de vitre).

Le cas échéant, le premier vitrage pourrait être essentiellement plastique (feuille(s) organique(s)), pour gagner en compacité et/ou en légèreté, ou pour permettre des formes plus diverses (généralement il comprend au moins une feuille de verre minéral comme indiqué précédemment). Un verre organique, par exemple en matière plastique transparente, est par exemple de type polycarbonate (PC), poly(téréphtalate d'éthylène) (PET), polyuréthane (PU), polymère acrylique tel que poly(méthacrylate de méthyle) (PMMA). Le premier vitrage peut ainsi être en verre organique (de préférence rigide, semi rigide) de préférence comme un polyméthacrylate de méthyle (PMMA), un polycarbonate (PC).

Le verre peut avoir été traité thermiquement, à une température supérieure ou égale à 450°C de préférence supérieure ou égale à 600°C, et notamment est même un verre bombé trempé.

L'épaisseur du premier vitrage est de préférence comprise entre 2 et 5mm, L'épaisseur du deuxième vitrage est de préférence comprise entre 2 et 5mm. On peut préférer des épaisseurs égales pour les deux verres.

Dans le cas d'un vitrage feuilleté, le deuxième vitrage peut être teinté et présente avantageusement une transmission lumineuse globale allant de 1,0% à 60,0% (en particulier de 10,0% à 50,0% et notamment de 20,0% à 40,0%). Il peut en outre présenter une transmission optique (déterminée de façon connue en faisant le rapport entre l'intensité transmise et l'intensité incidente à une longueur d'onde donnée) d'au moins 0,5% pour au moins une longueur d'onde, comprise dans le domaine du visible, au-dessus de 420 nm (et jusqu'à 780nm), et de préférence d'au moins 0,5% pour toutes les longueurs d'onde comprises dans le domaine allant de 420 à 780 nm.

Dans le cas d'un feuilleté, le module verrier comprend au moins un intercalaire de feuilletage tel qu'un film plastique, avantageusement transparent (de préférence en PVB ou PU (souple) ou thermoplastique sans plastifiant (copolymère éthylène/acétate de vinyle (EVA), etc.), chaque intercalaire ayant par exemple une épaisseur entre 0,2 mm et 1,1 mm, notamment 0,38 et 0,76 mm.

Le deuxième vitrage peut aussi être en verre organique (de préférence rigide, semi rigide) comme un polyméthacrylate de méthyle (PMMA)- de préférence avec intercalaire de feuilletage (PU)-, un polycarbonate (PC)-de préférence avec intercalaire de feuilletage PVB ou EVA-.

Dans le cas d'un feuilleté, on peut notamment choisir comme premier vitrage / intercalaire de feuilletage/ deuxième vitrage :
- verre minéral / PVB/ verre minéral,
- voire verre minéral / intercalaire de feuilletage/ polycarbonate,
- ou même polycarbonate (épais ou non) / intercalaire de feuilletage/ verre minéral.

Alternativement à une structure feuilletée impliquant un intercalaire de feuilletage (en feuille) typiquement thermoplastique, le module verrier (le vitrage lumineux) peut ne comprendre que le premier vitrage simple ou monolithique (par exemple une feuille) auquel éventuellement on rapporte un film fonctionnel auto adhésif (plastique teinté, décoratif etc) ou collé à la deuxième face du premier vitrage.

Chaque tranche couplée optiquement peut être façonnée, notamment droite et polie.

Comme défini selon l'invention, le vitrage lumineux selon l'invention comprend également au moins une source lumineuse couplée au guide pour une propagation de la lumière (par réflexion totale interne) à l'intérieur du guide (dans l'épaisseur), avantageusement associée ou couplée à la tranche du guide (dans un autre mode, elle pourrait éventuellement être associée ou couplée à l'une des faces principales (en particulier logée dans une cavité ou une rainure).

On peut utiliser une ou plusieurs sources de lumière (identiques ou non), par exemple électriques et/ou constituées de dispositif(s) électroluminescent(s) (DEL, ...). La ou les sources de lumière peuvent être mono- (émettant dans le bleu, vert, rouge, etc) ou polychromatiques, ou être adaptées ou combinées pour produire par exemple une lumière blanche, etc ; elles peuvent être continues ou discontinues, etc.

La tranche, le coin ou le bord d'une face du module verrier (du premier vitrage) peut comporter un évidement où sont placées les sources de lumière (on peut par exemple découper (avant trempage) le bord d'une feuille d'un vitrage simple ou feuilleté pour y loger des diodes) et/ou celles-ci peuvent être collées, notamment sur la tranche (on choisit alors une colle avec un indice optique de réfraction intermédiaire entre l'indice du guide et celui du milieu externe ou de la lentille par exemple). La zone évidée peut former une rainure le long du module verrier (du premier vitrage), pour loger une pluralité de sources, rainure non débouchante ou débouchante sur au moins un côté pour faciliter un montage par le côté. Les sources peuvent être dans un moyen de protection et/ou de maintien à l'intérieur de la zone évidée, notamment un profilé en U, fixé à la tranche de couplage par collage, encliquetage, par des boulons etc, et occuper une partie ou la majorité de la zone évidée.

Avantageusement (pour des raisons notamment de taille, environnementales, de chauffe...), on utilise des sources de lumière quasi ponctuelles (telles que des diodes), ces sources étant avantageusement placées le long de la tranche du module verrier, ce mode étant simple, économique et performant.

Les diodes peuvent être de simples puces semi-conductrices (sans encapsulation ou lentille de collimation), de taille par exemple de l'ordre de la centaine de µm ou d'un ou quelques millimètres (par exemple 1mm de largeur, 2,8 mm de longueur et 1,5 mm de hauteur). Elles peuvent aussi comprendre une enveloppe protectrice, provisoire ou non, pour protéger la puce lors de manipulations ou pour améliorer la compatibilité entre les matériaux de la puce et d'autres matériaux et/ou être encapsulées (par exemple encapsulation de faible volume de type 'SMD' (« surface monted device »), avec une enveloppe, par exemple en résine type époxy ou nylon ou PMMA, encapsulant la puce et ayant des fonctions diverses : protection contre l'oxydation et l'humidité, rôle diffusant, de focalisation, ou collimation, conversion de longueur d'onde...).

Le nombre total de diodes est défini par la taille et la localisation des zones à éclairer, par l'intensité lumineuse souhaitée et l'homogénéité de lumière requise.

La puissance de chaque diode est généralement inférieure à 1 W, notamment inférieure à 0,5 W. Chaque diode peut être de « haute puissance » (supérieure à 0,2 W) et/ou de luminosité supérieure à 5 lumens.

Les diodes peuvent être (pré)assemblées sur une ou des support PCB (PCB pour Printed Circuit Board en anglais) ou supports avec des pistes d'alimentation électrique, ces supports PCB pouvant être fixées à d'autres supports (profilés, etc.). Chaque support PCB peut s'étendre en bordure du module verrier et être fixé par pincement, chaussage, clipsage, vissage, colle ou ruban adhésif double face, etc. Le support PCB est généralement mince, notamment d'épaisseur inférieure ou égale à 3 mm, voire 1 mm, voire 0,1 mm ou inférieur le cas échéant à l'épaisseur d'un intercalaire de feuilletage. Plusieurs supports PCB peuvent être prévus, notamment si les zones à éclairer sont très distantes entre elles. Le support PCB peut être en matériau souple, diélectrique ou électroconducteur (métallique tel qu'aluminium etc), être composite, plastique, etc. Les diodes peuvent être soudées sur des pistes isolées électriquement de l'embase, et/ou sur des surfaces dissipatrices de chaleur ("thermal pad") sur des embases plastiques, ou un matériau isolant électrique et conducteur thermique (colle, ruban, scotch, adhésif double face, thermiquement conducteur, graisse thermique, etc.) peut fixer ou être intercalé pour une meilleure dissipation et efficacité lumineuse et pour la pérennité des diodes.

Les diodes peuvent comprendre voire être de préférence simples puces semi-conductrices par exemple de largeur W0 de l'ordre de la centaine de µm ou de 1 à 5mm. La largeur de chaque diode de la source de lumière est de préférence inférieure à l'épaisseur du premier vitrage.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

Chaque diode de la source de lumière peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support PCB,
- une diode, dont la direction principale d'émission est perpendiculaire ou oblique par rapport la face émettrice de la puce.

Les diodes de préférence ont un spectre (de type) gaussien.

Le diagramme d'émission d'une diode classiquement lambertien avec un demi angle d'émission de 60°.

De préférence la distance entre les puces (ou les moyens de collimation si présents) et la première tranche de couplage (respectivement la deuxième tranche de couplage) est inférieure ou égale à 5mm et même à 2mm.

D'autres types de sources que les diodes peuvent éventuellement être utilisées, le cas échéant dans un évidement à cet effet, ou sur un élément rapporté. Ces autres sources de lumière peuvent être directement sur l'une des faces du substrat (par exemple principale), ou être collées ou feuilletées avec un autre substrat, notamment transparent (verre...), à l'aide d'un intercalaire de feuilletage, notamment extraclair.

Quelle que soit la source lumineuse, l'épaisseur de la source est avantageusement faible, pouvant descendre jusqu'à quelques nanomètres ou dizaines de nanomètres notamment.

Dans un mode de réalisation avantageux, un ou plusieurs capteurs liés à l'environnement et/ou au vitrage peuvent être associés aux sources de lumière et/ou au système d'alimentation dudit vitrage. On peut utiliser par exemple un détecteur de luminosité (photodiode, etc.), un capteur de température (extérieur ou intégré, sur le verre ou les sources lumineuses), le capteur utilisé contrôlant par exemple l'alimentation des sources lumineuses via un calculateur ou unité centrale. On peut définir une valeur de mesure du capteur (luminosité maximale par exemple) au-delà de laquelle le vitrage cesse d'opérer une de ses fonctions (extraction de lumière ou activation des sources lumineuses notamment). Pour une valeur supérieure par exemple, l'alimentation du vitrage est bloquée et pour une valeur inférieure, le vitrage ou une de ses fonctions (par exemple son niveau de luminosité) peut être contrôlé(e) via l'information reçue du ou de(s) capteurs. La fonction du vitrage peut aussi être « forcée » par l'utilisateur en désactivant les capteurs.

Les capteurs peuvent être à l'intérieur (par exemple du bâtiment, du véhicule de transport en commun) ou à l'extérieur. La gestion du vitrage en fonction de l'environnement extérieur permet par exemple d'améliorer la durabilité des sources lumineuses et autres composants (polymères, composants électroniques...), la limitation de leur fonctionnement dans des conditions de luminosité et/ou de température élevées permettant notamment de réduire de manière significative (entre 10 et 20°C au minimum) les températures maximales auxquelles peuvent être exposées les sources lumineuses pendant l'utilisation du produit, tout en conservant les fonctions du vitrage lumineux. Ce couplage permet également d'adapter automatiquement l'intensité d'éclairage du vitrage aux conditions de luminosité extérieures, sans que l'utilisateur n'intervienne.

La présente invention sera mieux comprise et d'autres détails et caractéristiques avantageuses de l'invention apparaitront à la lecture des exemples de vitrages lumineux selon l'invention illustrés par les figures suivantes :
- La figure 1 représente une vue schématique en coupe d'un vitrage lumineux monolithique dans un premier mode de réalisation de l'invention ;
- la figure 1a est une vue d'une microparticule creuse utilisée pour l'extraction de lumière
- La figure 2 représente une vue schématique en coupe d'un vitrage lumineux feuilleté dans un deuxième mode de réalisation de l'invention ;
- La figure 3 représente une vue schématique en coupe d'un vitrage lumineux feuilleté formant miroir lumineux dans un troisième mode de réalisation de l'invention ;
- La figure 4 représente une vue schématique en coupe d'un vitrage lumineux feuilleté et décoratif dans un quatrième mode de réalisation de l'invention ;
- La figure 5 représente une vue schématique en coupe d'un vitrage lumineux qui est un vitrage isolant dans un cinquième mode de réalisation de l'invention.

On précise que par un souci de clarté les différents éléments des objets représentés ne sont pas nécessairement reproduits à l'échelle.

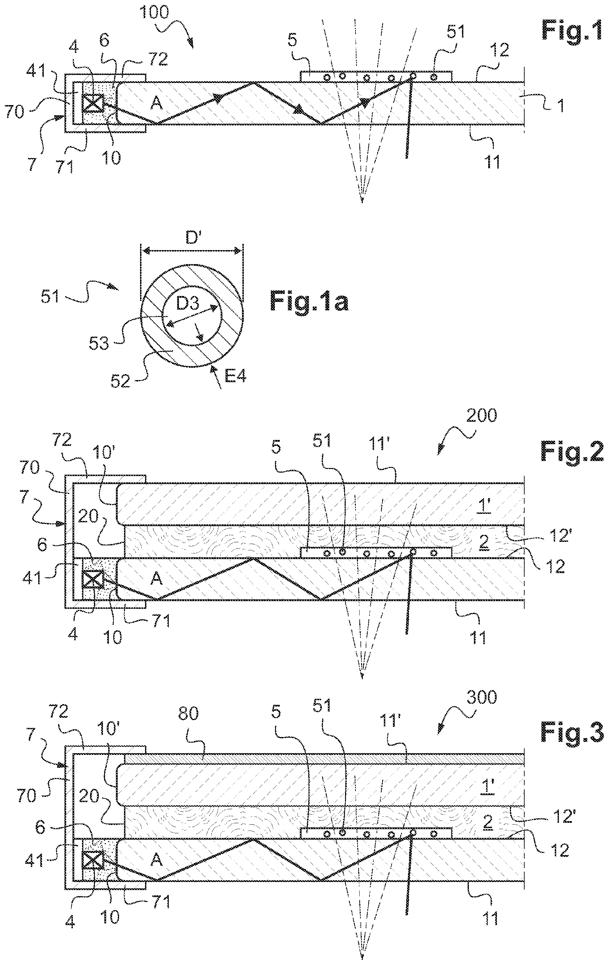

La figure 1 représente une vue schématique en coupe et partielle d'un vitrage lumineux 100 monolithique dans un premier mode de réalisation de l'invention.

Dans la figure 1, le vitrage selon l'invention comporte un module verrier sous forme d'un vitrage simple avec une tranche et des faces principales dénommées face A et face B. II comporte donc un premier vitrage 1, par exemple rectangulaire (de dimensions 300X300 mm par exemple), en verre minéral, plane et trempée présentant une première face principale 11 correspondant à la face A et une deuxième face principale 12 correspondant à la face B, et une tranche 10 par exemple arrondie ou plat (pour éviter les écailles) ici tranche longitudinale (ou en variante latérale), par exemple une feuille de verre silicosodocalcique, extraclair comme verre Diamant® commercialisée par la société Saint-Gobain Glass, d'épaisseur égale par exemple à 3mm , vitrage d'indice de réfraction n1 de l'ordre de 1,51 à 550nm.

Ce premier vitrage alternativement est en polycarbonate, ou même en PMMA.

Des diodes électroluminescentes 4 s'étendent en bordure du premier vitrage 1. Il s'agit ici de diodes à émission par le haut. Ainsi ces diodes 4 sont alignées sur un support PCB 41 en face de la première tranche 10, par exemple une barrette en parallélépipède, et leurs faces émettrices sont perpendiculaires au support PCB et à la tranche 10. Le support PCB est par exemple fixé par de la colle optique 6 (ou un double face transparent) à la première tranche.

Le support PCB avec les diodes est entre la première tranche et un profilé métallique 7 (aluminium, inox, pour la dissipation de chaleur) voire en plastique (rigide) de section en U, comportant une âme 70 en regard de la première tranche, une première aile (facultative mais préférée) 71 s'étendant jusqu'à être en regard du bord périphérique de la première face 11 et une deuxième aile 72 (facultative mais préférée) s'étendant jusqu'à être en regard du bord périphérique de la deuxième face 12. Le support PCB peut être contre ou fixé à l'âme 70 (éventuellement en supprimant la colle 6). Dans le cas de diodes à émission latérale, le support PCB peut être contre ou fixé à la première ou deuxième aile.

Les diodes électroluminescentes comportant chacune une puce émettrice apte à émettre un ou plusieurs rayonnements dans le visible guidé(s) dans le premier vitrage 1. Les diodes sont de petites tailles typiquement quelques mm ou moins, notamment de l'ordre de 2x2x1 mm, sans optique (lentille) et de préférence non pré-encapsulées pour réduire au maximum l'encombrement.

On réduit au maximum la distance des diodes et la tranche 10, par exemple de 1 à 2mm.

La direction principale d'émission est perpendiculaire à la face de la puce semiconductrice, par exemple avec une couche active à multipuits quantiques, de technologie AlInGaP ou autres semi-conducteurs.

Le cône de lumière est un cône de type lambertien, de +/-60°.

Le vitrage 100 peut avoir une pluralité de zones de lumière, la ou les zones lumineuses occupant de préférence moins de 50%, de la surface d'au moins une face, notamment de géométrie donnée (rectangulaire, carré, rond ...)

Le rayon lumineux A (après réfraction sur la tranche 10) se propage par réflexion totale interne (au niveau de la deuxième face 12 et de la face 11 dite face A) dans le premier vitrage 1 formant un guide de lumière. Pour l'extraction de lumière, une couche diffusante 5 est déposée sur la deuxième face 12 du premier vitrage. Elle comporte une matrice transparente 50, de préférence incolore, d'indice de réfraction n2 au moins égal à n1 ou tel que n1-n2 est d'au plus 0,15 incorporant des particules diffusantes 51.

On choisit des microparticules de préférence creuses formées d'une coquille diélectrique 52 entourant un coeur gazeux d'indice de réfraction n3 d'au plus 1,15, de préférence de l'air, comme montré en figure 1a.

Le diamètre D₃ (diamètre du coeur) est dans une gamme allant de 5µm à 200µm mieux allant de 20µm à 100µm. Le diamètre D' des microparticules (diamètre externe de la coquille) est inférieure à 2 D₃. L'épaisseur de la coquille est de plus de 500nm.

Le taux de couverture des microparticules est de préférence de 1% à 10%. Il est détermine par observation au microscope optique.

La zone diffusante est rectangulaire de 10cm par 10cm. La zone diffusante est une couche pleine, continue.

A titre illustratif, les microparticules sont des microbilles creuses de verre de diamètre moyen D' de 65µm (produit dénommé Glass Bubbles K1 vendu par la société 3M) et dont la coquille est d'épaisseur submicronique E4 de quelques centaines de nm et sont placées dans une résine incolore à base de silicone-époxy dénommée SILIKOPON® vendue par la société TEGO EVONIK. L'ensemble résine chargée de microbilles creuses est étalée sur la deuxième face 12 à l'aide d'une barre d'enduction motorisée (bar coating en anglais) afin d'obtenir une épaisseur de 120µm rapportée sur la deuxième face 12.

Par exemple on place l'illuminant côté opposé à la couche diffusante pour réaliser les mesures de flou et de netteté d'image.

Dans un premier exemple, la concentration des microsphères est choisie afin d'atteindre un taux de couverture de 1%. Le flou H₁ du premier vitrage avec la couche diffusante est de 1,5% et dans une zone sans la couche diffusante le flou est inférieur à 1%. La netteté d'image du premier vitrage avec la couche diffusante est de 99% et dans une zone sans la couche diffusante la netteté d'image est quasi de 100%. La luminance est supérieure à 1cd/m².

Dans un deuxième exemple, la concentration des microsphères est choisie afin d'atteindre un taux de couverture de 5%. Le flou H₁ du premier vitrage avec la couche diffusante est de 5% et toujours dans une zone sans la couche diffusante le flou est inférieur à 1%. La netteté d'image du premier vitrage avec la couche diffusante est de 97% et dans une zone sans la couche diffusante la netteté d'image est toujours quasi de 100%. La luminance est de l'ordre de 10cd/m².

Lorsque les diodes sont éteintes, le premier vitrage revêtu de la couche diffusante est de transmission lumineuse TL de l'ordre de 88%.

Le dépôt de la couche diffusante peut être réalisé avant ou après trempe, de préférence après s'il s'agit d'une matrice transparente résine.

Alternativement, la couche diffusante 5 est sur la face A.

Le rayon A réfracté dans la couche diffusante 5 rencontre une microsphère creuse diffusante qui permet l'extraction de lumière notamment vers la face A.

La faible quantité de microsphères creuses alliée au choix d'une matrice transparente permet de limiter le flou H1 du premier vitrage revêtu de la couche diffusante.

On peut choisir des diodes émettant en lumière blanche et/ou colorée pour un éclairage d'ambiance, de lecture...On peut choisir une lumière rouge éventuellement en alternance avec de la lumière verte pour de la signalisation dans le train.

Lorsque les diodes sont allumées, l'extraction peut former un dessin lumineux, par exemple un logo ou une marque.

Alternativement, on peut ajouter un isolateur optique discontinu de part et d'autre de la couche diffusante et une couche décorative par exemple un fond continu coloré. Cette couche décorative n'est pas nécessairement sur la couche diffusante.

Alternativement, on peut ajouter un isolateur optique sur la deuxième face et une couche décorative par exemple un fond continu coloré. La couche diffusante est alors sur la première face.

Alternativement, on peut ajouter une couche miroir (couche à l'argent protégée) sur la deuxième face, miroir couvrant ou miroir partiel. La couche diffusante est alors sur la première face.

Dans la figure 2 le vitrage lumineux 200 diffère de celui décrit en figure 1 par le fait qu'il s'agit d'un vitrage feuilleté lequel comporte en plus :
- un intercalaire de feuilletage 2, par exemple un PVB clair d'épaisseur 0,76 mm, de préférence de flou d'au plus 1,5%, avec une tranche 20 ici longitudinale sensiblement aligné avec la tranche longitudinale 10, intercalaire de feuilletage d'indice de réfraction n_{f} inférieur à n1 égale à 1,48 à 550 nm
- un deuxième vitrage 5, de même dimensions et de même composition de verre avec une face principale dite interne ou de feuilletage 12' en face de la deuxième face 12, et une autre face principale 11' correspondant à la face B, et une tranche 10' ici longitudinale.

Un guidage se fait dans le premier vitrage et pour d'autres rayons entre la face A et la face B.

En fait on peut placer les diodes n'importe où sur la tranche du vitrage feuilleté de même que la couche diffusante sans trop pénaliser la luminance.

On gagne un peu en luminance si on ajoute un isolateur optique en face 12 de part et d'autre de la couche diffusante (de part et d'autre de la couche diffusante si en face 12) voire même sur la couche diffusante.

Alternativement, en particulier pour les applications bâtiment ou de mobilier, l'intercalaire de feuilletage 2, est un EVA clair d'épaisseur 0,76 mm, de préférence de flou d'au plus 1,5%, d'indice de réfraction n_{f} sensiblement égal à n1. Dans ce cas, le guidage est surtout entre la face A et la face B. Là aussi, on peut placer les diodes n'importe où sur la tranche du vitrage feuilleté de même que la couche diffusante sans trop pénaliser la luminance.

Alternativement, le deuxième vitrage 5, de mêmes dimensions, est :
- en verre minéral teinté par exemple le verre VENUS VG10 ou TSA 4+ commercialisée par la société Saint-Gobain Glass,
- et/ou texturé ou avec une couche décorative (teintée ou diffusante) en face 11' ou en face 12',

Alternativement ou cumulativement, l'intercalaire de feuilletage est teinté.

Dans ces deux dernières configurations, on place très préférentiellement les diodes en regard du premier vitrage et la couche diffusante sur le premier vitrage et on préfère le PVB à l'EVA ou tout autre matériau plus bas indice que le verre 1. On gagne beaucoup en luminance si on ajoute un isolateur optique en face 12 (de part et d'autre de la couche diffusante si en face 12).

Dans un mode de réalisation alternatif non illustré d'un vitrage feuilleté, différent par l'absence de la résine de celui décrit en figure 1, les microparticules (microbilles creuses de verre) sont liées par l'intercalaire de feuilletage clair en PVB ou EVA. Par exemple on étale les microparticules sur la deuxième face (face de feuilletage) du premier vitrage puis on appose l'intercalaire de feuilletage avant de réaliser le cycle de feuilletage. Par précaution les billes peuvent même être préfixées via des points de colle optique sur la deuxième face, avant le feuilletage. Alternativement, on étale les microparticules sur la face principale de l'intercalaire de feuilletage destinée à être en contact du premier vitrage puis on appose le premier vitrage avant de réaliser le cycle de feuilletage. Par précaution les billes peuvent même être préfixées via des points de colle optique sur cette face de l'intercalaire, avant le feuilletage.

Dans la figure 3, le vitrage lumineux 300 diffère du vitrage lumineux 200 décrit en figure 2 par le fait que la face B est couverte par une couche miroir 80, par exemple une couche d'argenture protégée par une surcouche. La fonction miroir est préservée à l'état off dans la zone diffusante.

On peut préférer disposer la couche diffusante plutôt vers la tranche 10 pour laisser une large zone centrale de miroir (et la couche diffusante est alors décalée de la couche miroir). On peut doubler les moyens pour avoir deux zones lumineuses périphériques (deux bandes verticales ou horizontales, pleines ou sous forme d'un réseau de motifs, deux ensembles de diodes sur des tranches opposées).

Un guidage se fait dans le premier vitrage et pour d'autres rayons entre la face A et la face B.

On peut placer les diodes n'importe où sur la tranche du vitrage feuilleté de même que la couche diffusante (en dehors de la face B tout de même) sans trop pénaliser la luminance.

On gagne un peu en luminance si on ajoute un isolateur optique en face 12 de part et d'autre de la couche diffusante (de part et d'autre de la couche diffusante si en face 12) ou même en face 12'.

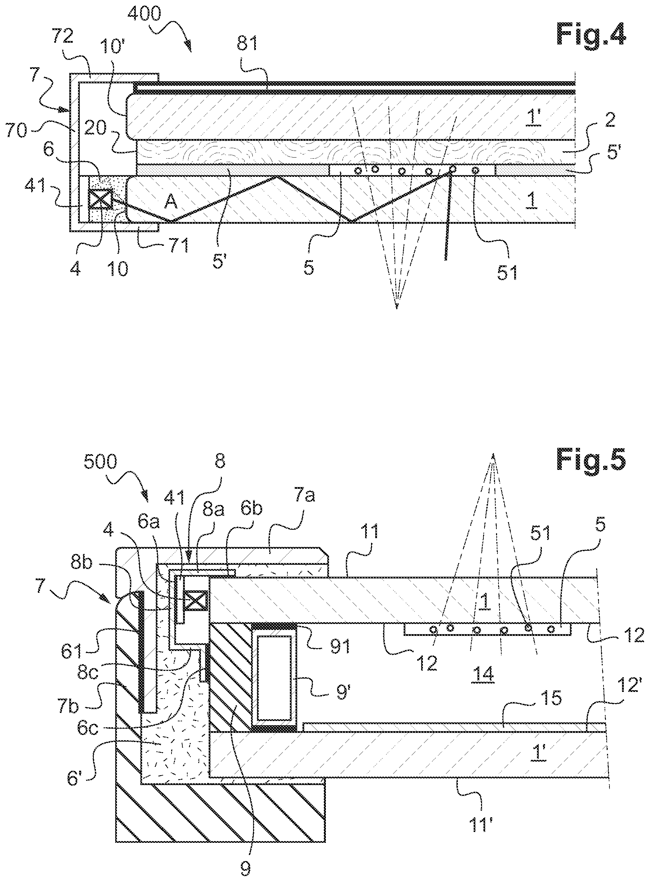

Dans la figure 4, le vitrage lumineux 400 diffère du vitrage lumineux 200 décrit en figure 2 d'abord par le fait que la face 11' ou B est couverte par une couche décorative 81, par exemple une couche d'émail colorée, pleine ou en motifs. Le vitrage lumineux 400 diffère aussi par la couche de silice poreuse sol- gel de 400nm déposée sur la deuxième face 12 avant feuilletage, couche discontinue pour laisser la couche diffusante adjacente (à côté et en contact) sur la deuxième face 12. Alternativement, la couche diffusante 5 est en face 11' voire même sous l'isolateur optique.

La vision du décor est préservée à l'état off dans la zone diffusante.

En variante, on peut imprimer une photo sur la face 12' avec une ou des zones libres destinées à être en regard avec une ou des zones diffusantes (dessin avec lampe, luminaire, lampadaire dans une ville, etc..).

En variante, un émail (de masquage) noir ou foncé limité à une zone périphérique en face 11' ou 12' coté couplage optique est ainsi isolé par l'isolateur optique 5'.

En variante, on supprime la couche 8 et on utilise une autre couche diffusante ou la même couche diffusante que celle sur le premier vitrage et on rajoute une deuxième source de lumière en face de la tranche 10' du deuxième vitrage. On peut avoir des zones lumineuses allumées indépendamment et de couleurs distinctes.

Dans la figure 5, le vitrage lumineux 500 diffère du vitrage lumineux 100 décrit en figure 1 surtout par le fait qu'il s'agit d'un vitrage isolant, en double vitrage ici pour porte de meuble réfrigéré.

Cette porte vitrée lumineuse 400 comprend un module verrier formant un vitrage isolant avec une face principale externe A ou 11 côté usager et une face principale interne 11' (côté tablettes) comportant :
- un premier vitrage comportant la face externe A et une première tranche formée de quatre bords dont un premier bord longitudinal, premier vitrage ici simple comportant une première feuille en verre 1 présentant une première face principale 11 et une deuxième face principale 12, la première face étant donc la face externe, par exemple une feuille de verre silicosodocalcique et extraclair, d'épaisseur égale à au moins 3,8mm (4mm ou 6mm standard),
- un deuxième vitrage comportant la face interne 12' et une deuxième tranche formée de quatre bords dont un deuxième bord longitudinal, deuxième vitrage ici simple comportant une deuxième feuille en verre 1', avec une troisième face 12' étant ici la face interne et une quatrième face principale 11', les faces 12 et 12' étant espacées par une première lame de gaz (air ou argon),
- en périphérie des faces 12 et 12' un premier joint polymérique 9 en cadre et un intercalaire formant espaceur 9'.

Usuellement, l'intercalaire 9' est fixé à l'intérieur du vitrage 500 par ses faces latérales aux faces 12, 12' par du caoutchouc butyl 91 qui a également pour rôle de rendre étanche l'intérieur du vitrage isolant à la vapeur d'eau. L'intercalaire 9' est disposé en retrait à l'intérieur du vitrage et à proximité des bords longitudinaux des tranches desdites feuilles de verre, de façon à ménager une gorge périphérique dans laquelle sont injectés un premier joint polymérique 9 du type mastic, tel qu'en polysulfure ou polyuréthane. Le mastic confirme l'assemblage mécanique des deux feuilles de verre 1,1' et assure une étanchéité à l'eau liquide ou aux solvants.

La source lumineuse 4 (diodes) est externe au vitrage isolant. Les diodes sont couplées optiquement avec le premier bord longitudinal. Les diodes sont encore sur support PCB 41 et s'étendent en regard du premier bord. Le support PCB 41 ne dépasse pas de la première tranche en direction de la face externe 11, est ici collé par une colle conductrice 6a sur un métal 8b pour la dissipation thermique.

La couche diffusante 5 avec les microparticules 5 est sur la deuxième face 12.

Le deuxième vitrage 1' comporte une première couche à fonction thermique 15, sur la troisième face 12'.

Le support PCB 41 et la source 4 sont dans une cavité délimitée par le bord d'injection et une pièce dite porteuse 8. La pièce porteuse 8 est un profilé métallique, ici une tôle -extrudée ou pliée- en aluminium d'épaisseur de 1,5mm. Ce profilé 8 présente une partie 8c collée par un double face 6c au mastic 9. La pièce porteuse 8 ne touche pas à la fois le premier et le deuxième vitrage 1' pour ne pas former un pont thermique. Elle peut être notamment espacée de 2mm de la première face 11 pour que le support de source ne dépasse pas vers la face externe 11. La pièce porteuse 8 comporte un retour 8a fixé à la face 11 par adhésif 6b.

La porte vitrée 500 comprend en outre un profilé d'encadrement 7 fixé au vitrage isolant de préférence par une colle dite de montage 6' et masquant premier joint 9 et intercalaire 9'. Il forme un montant d'encadrement 7 longitudinal (vertical sur la porte montée) fixé au vitrage isolant par la colle de montage 6'.

Le montant d'encadrement 7 est en deux parties pour éviter le pont thermique (si tout métallique). Une première partie métallique 7a est coudée par exemple profilé de section en L, pour être en regard du bord de couplage optique et dépasser sur la face externe 11:
- avec une partie collée à la face externe,
- avec une partie en regard de la tranche du vitrage isolant (et décalée de la tranche du deuxième vitrage)

La deuxième partie 7b est isolante thermique, de préférence polymérique solidaire par une colle 61 avec la première partie 7a, coudée, pour être en regard de la tranche du deuxième vitrage et dépassant sur la face interne 11'.

En variante il peut s'agir d'une fenêtre avec un montant d'encadrement adapté ou encore d'un vitrage latéral de train. Le premier vitrage est côté intérieur de la pièce, du wagon.

## Revendications

1. Vitrage lumineux (100, 200, 300, 400, 500) comprenant :
- un module verrier avec une tranche et des faces principales (11, 11') dénommées face A et face B, module comportant au moins un premier vitrage (1), en verre minéral ou organique, d'indice de réfraction n1 d'au moins 1,4 à 550 nm avec des première et deuxième faces principales (11, 12),
- une source de lumière (4) couplée optiquement au module verrier, le module verrier formant ainsi guide de lumière émise par la source de lumière,
- des moyens d'extraction de lumière de la lumière guidée pour former une zone diffusante (5) de largeur d'au moins 1cm, moyens d'extraction de lumière comportant une couche diffusante comprenant des particules diélectriques diffusantes (51) et liées par une matrice (50), couche diffusante associée à l'une des première ou deuxième faces,
**caractérisé en ce que** la matrice (50) est transparente d'indice de réfraction n2 au moins égal à n1 ou tel que n1-n2 est d'au plus 0,15 à 550 nm et **en ce que** les particules diffusantes en majorité sont des microparticules espacées entre elles et comprenant une coquille en un matériau diélectrique et transparent et en contact avec la matrice transparente, coquille (52) entourant un coeur (53) d'indice de réfraction n3 d'au plus 1,15 à 550 nm, coeur de plus grande dimension dite D3 dans une gamme allant de 5µm à 200µm, les microparticules ayant une plus grande dimension dite D' inférieure à 2D₃.

2. Vitrage lumineux (100, 200, 300, 400, 500) selon la revendication 1 **caractérisé en ce que** le taux de couverture des microparticules (51) est d'au plus 20% et de préférence d'au plus 10% et même d'au moins 1%.

3. Vitrage lumineux (100, 200, 300, 400, 500) selon l'une des revendications précédentes **caractérisé en ce que** les microparticules (51) sont creuses et de préférence le matériau diélectrique de la coquille (52) est en verre minéral, en silice, en oxyde métallique.

4. Vitrage lumineux (100, 200, 300, 400, 500) selon l'une des revendications précédentes **caractérisé en ce que** le matériau diélectrique de la coquille (52) est en verre minéral ou en silice, en oxyde métallique.

5. Vitrage lumineux (100, 200, 300, 400, 500) selon l'une des revendications précédentes **caractérisé en ce que** ladite plus grande dimension D₃ est dans la gamme allant de 20µm à 100µm.

6. Vitrage lumineux (100, 200, 300, 400, 500) selon l'une des revendications précédentes **caractérisé en ce que** la couche diffusante (5) comporte une couche liant les microparticules en matériau choisi parmi un liant organique, en particulier à base d'acrylate, de silicone, d'époxy, de silicone-époxy ou de polyuréthane, ou un liant minéral comme un oxyde métallique et/ou de silice et/ou la couche diffusante (5) comporte une couche de PVB ou d'EVA liant les microparticules.

7. Vitrage lumineux (100, 200, 300, 400, 500) selon l'une des revendications précédentes **caractérisé en ce que** la couche diffusante (5) est directement sur la première (11) ou la deuxième face (12) du premier vitrage (1), et en définissant le flou, dit H₁, à l'état off, de l'ensemble premier vitrage et couche diffusante, H1 est d'au plus 10% et de préférence d'au plus 5% et même d'au plus 2%.

8. Vitrage lumineux (100, 200, 300, 400, 500) selon l'une des revendications précédentes **caractérisé en ce que** la couche diffusante (5) est directement sur la première (11) ou la deuxième face (12) du premier vitrage (1) et la netteté d'image, à l'état off de l'ensemble premier vitrage et couche diffusante est d'au moins 90%.

9. Vitrage lumineux (100, 200, 300, 400, 500) selon l'une des revendications précédentes **caractérisé en ce que** la source de lumière comporte un ensemble de diodes électroluminescentes (4) sur un support PCB.

10. Vitrage lumineux (400) selon l'une des revendications précédentes **caractérisé en ce que** la source de lumière, de préférence des diodes sur support PCB, est couplée optiquement au premier vitrage, **en ce qu'**une couche de silice poreuse sol-gel d'indice de réfraction d'au plus 1,3 même d'au plus 1,2 à 550 nm est sur la deuxième face du premier vitrage, **en ce que** la couche diffusante (5) est sur la première face (11) ou du côté de la deuxième face (12) du premier vitrage (1) et lorsque que la couche diffusante est côté de la deuxième face la couche de silice poreuse présente une ou des discontinuités et la couche diffusante est en regard de la ou les discontinuités, notamment sur la deuxième face et entre la ou les discontinuités et **en ce qu'**éventuellement le module verrier est un vitrage feuilleté comportant ledit premier vitrage en verre minéral (1) de préférence clair voire extraclair, et coté deuxième face (12) une intercalaire de feuilletage (2) en matière polymérique éventuellement teintée de préférence thermoplastique et un deuxième vitrage (1') en verre minéral éventuellement comportant une couche dite décorative absorbante et/ou diffusante.

11. Vitrage (200, 300, 400) selon l'une des revendications précédentes **caractérisé en ce que** le module verrier est un vitrage feuilleté comportant ledit premier vitrage en verre minéral (1) de préférence clair voire extraclair, et comportant côté deuxième face (12) un intercalaire de feuilletage (2) en matière polymérique de préférence thermoplastique et un deuxième vitrage (1') en verre minéral de préférence clair voire extraclair.

12. Vitrage lumineux (200, 300, 400) selon l'une des revendications 1 à 10 **caractérisé en ce que** le module verrier est un vitrage feuilleté comportant ledit premier vitrage en verre minéral, une intercalaire de feuilletage en matière polymérique notamment thermoplastique et un deuxième vitrage en verre minéral, et **en ce que** les microparticules sont liées par la matière polymérique formant la matrice transparente.

13. Vitrage lumineux (200, 300, 400) selon l'une des revendications 10 à 12 **caractérisé en ce que** l'intercalaire de feuilletage est un PVB ou un EVA.

14. Vitrage lumineux (200, 300, 400) selon l'une des revendications précédentes **caractérisé en ce qu'**il forme un vitrage de bâtiment, de mobilier ou de transport en commun.

15. Vitrage lumineux (500) selon l'une des revendications 1 à 14 **caractérisé en ce qu'**il forme un vitrage isolant qui comporte un vitrage supplémentaire avec des troisième et quatrième faces principales, la troisième face, la plus interne, étant espacé du module verrier, de préférence formant un vitrage simple, par une lame de gaz, un premier joint polymérique en cadre étant agencé en périphérie de la troisième face et en contact avec le module verrier, de préférence la première face ou la deuxième face du premier vitrage.

16. Vitrage lumineux (500) selon la revendication précédente **caractérisé en ce qu'**il forme un vitrage latéral de train, de tramway, de métro, une porte de meuble réfrigéré, une fenêtre notamment de toit, une porte fenêtre.

17. Vitrage lumineux (100) selon l'une des revendications 1 à 10 **caractérisé en ce qu'**il forme un vitrage simple clair ou extraclair plan et trempé, le premier vitrage étant ainsi clair ou extraclair plan et trempé.

18. Vitrage lumineux (100, 200, 300, 400, 500) selon l'une des revendications précédentes **caractérisé en ce qu'**il comporte un profilé de montage du vitrage, la source de lumière étant dans le volume entre le profilé de montage et la tranche du module verrier, le profilé comportant une âme en regard de la tranche du module verrier, de préférence une première aile sur l'une des faces principales externes du vitrage lumineux, et de préférence une deuxième aile sur au moins l'autre des faces principales externes du vitrage lumineux.

19. Vitrage lumineux (500) selon l'une des revendications précédentes **caractérisé en ce que** la source de lumière comporte un ensemble de diodes électroluminescentes (4) sur un support PCB et en ce qu"il comporte un profilé porteur du support PCB dans le volume entre le profilé de montage et la tranche du module verrier.

## Patentansprüche

1. Beleuchtete Glasscheibe (100, 200, 300, 400, 500), umfassend:
- ein Glasmodul mit einer Randfläche und mit Hauptflächen (11, 11'), als Fläche A und Fläche B bezeichnet, wobei das Modul mindestens eine erste Glasscheibe (1) aus anorganischem oder organischem Glas mit einem Brechungsindex n1 von mindestens 1,4 bei 550 nm mit einer ersten und zweiten Hauptfläche (11, 12) umfasst,
- eine Lichtquelle (4), die mit dem Glasmodul optisch gekoppelt ist, sodass das Glasmodul für das von der Lichtquelle abgestrahlte Licht einen Lichtleiter bildet,
- Mittel zum Auskoppeln von Licht aus dem geführten Licht, um eine mindestens 1 cm breite Streuzone (5) zu bilden, wobei die Mittel zum Auskoppeln von Licht eine streuende Schicht umfassen, die streuende dielektrische Partikel (51) enthält, die durch eine Matrix (50) gebunden sind, wobei die streuende Schicht der ersten oder der zweiten Fläche zugeordnet ist,
**dadurch gekennzeichnet, dass** die Matrix (50) transparent ist, mit einem Brechungsindex n2, der mindestens gleich n1 oder derart ist, dass bei 550 nm n1 - n2 höchstens 0,15 beträgt, und dadurch, dass die streuenden Partikel in der Mehrzahl Mikropartikel sind, die voneinander beabstandet sind und eine Hülle aus einem dielektrischen und transparenten Material in Kontakt mit der transparenten Matrix aufweisen, wobei die Hülle (52) einen Kern (53) mit einem Brechungsindex n3 von höchstens 1,15 bei 550 nm umgibt, wobei die größte, als D3 bezeichnete Abmessung des Kerns im Bereich von 5 µm bis 200 µm liegt, sodass die Mikropartikel eine größte Abmessung, als D' bezeichnet, aufweisen, die kleiner als 2D₃ ist.

2. Beleuchtete Glasscheibe (100, 200, 300, 400, 500) nach Anspruch 1, **dadurch gekennzeichnet, dass** der Bedeckungsgrad der Mikropartikel (51) höchstens 20 % und vorzugsweise höchstens 10 % und sogar mindestens 1 % beträgt.

3. Beleuchtete Glasscheibe (100, 200, 300, 400, 500) nach einem der vorhergehenden Ansprüche, **dadurch gekennzeichnet, dass** die Mikropartikel (51) hohl sind und das dielektrische Material der Hülle (52) vorzugsweise aus anorganischem Glas, aus Quarz, aus Metalloxid besteht.

4. Beleuchtete Glasscheibe (100, 200, 300, 400, 500) nach einem der vorhergehenden Ansprüche, **dadurch gekennzeichnet, dass** das dielektrische Material der Hülle (52) aus anorganischem Glas oder aus Quarz, aus Metalloxid besteht.

5. Beleuchtete Glasscheibe (100, 200 300, 400, 500) nach einem der vorhergehenden Ansprüche, **dadurch gekennzeichnet, dass** die größte Abmessung D₃ im Bereich von 20 µm bis 100 µm liegt.

6. Beleuchtete Glasscheibe (100, 200, 300, 400, 500) nach einem der vorhergehenden Ansprüche, **dadurch gekennzeichnet, dass** die streuende Schicht (5) eine die Mikropartikel bindende Schicht aus einem Material, das aus einem organischen Bindemittel, insbesondere auf Acrylat-, Silikon-, Epoxid-, Silikonepoxid- oder Polyurethanbasis, oder einem anorganischen Bindemittel, wie etwa einem Metalloxid und/oder Siliciumdioxid, ausgewählt ist, umfasst und/oder die streuende Schicht (5) eine die Mikropartikel bindende PVB- oder EVA-Schicht umfasst.

7. Beleuchtete Glasscheibe (100, 200, 300, 400, 500) nach einem der vorhergehenden Ansprüche, **dadurch gekennzeichnet, dass** sich die streuende Schicht (5) direkt auf der ersten (11) oder der zweiten Fläche (12) der ersten Glasscheibe (1) befindet und bei Zugrundelegung der als H₁ bezeichneten Unschärfe im Off-Zustand für die Gesamtheit aus erster Glasscheibe und streuender Schicht H₁ höchstens 10 % und vorzugsweise höchstens 5 % und sogar höchstens 2 % beträgt.

8. Beleuchtete Glasscheibe (100, 200, 300, 400, 500) nach einem der vorhergehenden Ansprüche, **dadurch gekennzeichnet, dass** sich die streuende Schicht (5) direkt auf der ersten (11) oder der zweiten Fläche (12) der ersten Glasscheibe (1) befindet und die Bildschärfe im Off-Zustand für die Gesamtheit aus erster Glasscheibe und streuender Schicht mindestens 90 % beträgt.

9. Beleuchtete Glasscheibe (100, 200, 300, 400, 500) nach einem der vorhergehenden Ansprüche, **dadurch gekennzeichnet, dass** die Lichtquelle einen Satz Leuchtdioden (4) auf einem Leiterplattenträger umfasst.

10. Beleuchtete Glasscheibe (400) nach einem der vorhergehenden Ansprüche, **dadurch gekennzeichnet, dass** die Lichtquelle, vorzugsweise Dioden auf einem Leiterplattenträger, mit der ersten Glasscheibe optisch gekoppelt ist, dadurch, dass sich eine poröse Sol-Gel-Quarzschicht mit einem Brechungsindex von höchstens 1,3 oder sogar höchstens 1,2 bei 550 nm auf der zweiten Fläche der ersten Glasscheibe befindet, dadurch, dass sich die streuende Schicht (5) auf der ersten Fläche (11) oder auf der Seite der zweiten Fläche (12) der ersten Glasscheibe (1) befindet und, wenn sich die streuende Schicht auf der zweiten Fläche befindet, die poröse Quarzschicht eine oder mehrere Diskontinuitäten aufweist und die streuende Schicht der oder den Diskontinuitäten gegenüberliegt, insbesondere auf der zweiten Fläche und zwischen der oder den Diskontinuitäten, und dadurch, dass das Glasmodul gegebenenfalls eine Verbundverglasung ist, welche die erste, vorzugsweise klare oder sogar extraklare Glasscheibe (1) aus anorganischem Glas und auf der Seite der zweiten Fläche (12) eine Verbund-Zwischenschicht (2) aus polymerem, gegebenenfalls getöntem, vorzugsweise thermoplastischem Material, und eine zweite Glasscheibe (1') aus anorganischem Glas umfasst, die gegebenenfalls eine sogenannte dekorative, absorbierende und/oder streuende Schicht umfasst.

11. Glasscheibe (200, 300, 400) nach einem der vorhergehenden Ansprüche, **dadurch gekennzeichnet, dass** das Glasmodul eine Verbundverglasung ist, welche die erste, vorzugsweise klare oder sogar extraklare Glasscheibe (1) aus anorganischem Glas umfasst und auf der Seite der zweiten Fläche (12) eine Verbund-Zwischenschicht (2) aus polymerem, vorzugsweise thermoplastischem Material und eine zweite, vorzugsweise klare oder sogar extraklare Glasscheibe (1') aus anorganischem Glas umfasst.

12. Beleuchtete Glasscheibe (200, 300, 400) nach einem der Ansprüche 1 bis 10, **dadurch gekennzeichnet, dass** das Glasmodul eine Verbundverglasung ist, welche die erste Glasscheibe aus anorganischem Glas, eine Verbund-Zwischenschicht aus polymerem, vorzugsweise thermoplastischem Material und eine zweite Glasscheibe aus anorganischem Glas umfasst, und dadurch, dass die Mikropartikel durch das polymere Material gebunden sind, das die transparente Matrix bildet.

13. Beleuchtete Glasscheibe (200, 300, 400) nach einem der Ansprüche 10 bis 12, **dadurch gekennzeichnet, dass** die Verbund-Zwischenschicht PVB oder EVA ist.

14. Beleuchtete Glasscheibe (200, 300, 400) nach einem der vorhergehenden Ansprüche, **dadurch gekennzeichnet, dass** sie eine Verglasung für Gebäude, Möbel oder öffentliche Verkehrsmittel bildet.

15. Beleuchtete Glasscheibe (500) nach einem der Ansprüche 1 bis 14, **dadurch gekennzeichnet, dass** sie eine Isolierverglasung bildet, die eine zusätzliche Glasscheibe mit einer dritten und einer vierten Hauptfläche umfasst, wobei die dritte, am weitesten innen liegende Fläche, durch eine Gasschicht von dem Glasmodul, das vorzugsweise eine Einfachverglasung bildet, beabstandet ist und eine erste Rahmendichtung aus Kunststoff am Umfang der dritten Fläche und in Kontakt mit dem Glasmodul, vorzugsweise mit der ersten Fläche oder der zweiten Fläche der ersten Glasscheibe, angeordnet ist.

16. Beleuchtete Glasscheibe (500) nach dem vorhergehenden Anspruch, **dadurch gekennzeichnet, dass** sie eine Seitenverglasung für Züge, Straßenbahnen, U-Bahnen, eine Kühlmöbeltür, ein Fenster, insbesondere ein Dachfenster, eine Fenstertür bildet.

17. Beleuchtete Glasscheibe (100) nach einem der Ansprüche 1 bis 10, **dadurch gekennzeichnet, dass** sie eine ebene und vorgespannte, klare oder extraklare Einfachverglasung bildet.

18. Beleuchtete Glasscheibe (100, 200, 300, 400, 500) nach einem der vorhergehenden Ansprüche, **dadurch gekennzeichnet, dass** sie ein Verglasungsmontageprofil umfasst, wobei sich die Lichtquelle im Raum zwischen dem Montageprofil und der Randfläche des Glasmoduls befindet, wobei das Profil einen der Randfläche des Glasmoduls zugewandten Steg, vorzugsweise einen ersten Flügel auf einer der äußeren Hauptflächen der beleuchteten Glasscheibe und vorzugsweise einen zweiten Flügel auf mindestens der anderen der äußeren Hauptflächen der beleuchteten Glasscheibe, umfasst.

19. Beleuchtete Glasscheibe (500) nach einem der vorhergehenden Ansprüche, **dadurch gekennzeichnet, dass** die Lichtquelle einen Satz Leuchtdioden (4) auf einem Leiterplattenträger umfasst und dass die Glasscheibe ein Profil umfasst, das den Leiterplattenträger in dem Raum zwischen dem Montageprofil und der Randfläche des Glasmoduls trägt.

## Claims

1. A luminous glazing unit (100, 200, 300, 400, 500) comprising:
- a glazing module with an edge face and main faces (11, 11') denoted face A and face B, said module including at least one first glazing pane (1), made of organic or mineral glass, of refractive index n1 of at least 1.4 at 550 nm with first and second main faces (11, 12);
- a light source (4) optically coupled to the glazing module, the glazing module thus forming a guide of light emitted by the light source; and
- light-extracting means for extracting the guided light in order to form a scattering zone (5) of width of at least 1 cm, said light-extracting means including a scattering layer comprising scattering dielectric particles (51) bound by a matrix (50), said scattering layer being associated with one of the first or second faces;
**characterized in that** the matrix (50) is transparent and of refractive index n2 at least equal to n1 or such that n1-n2 is at most 0.15 at 550 nm
and **in that** the scattering particles are mainly microparticles that are spaced apart from one another and that comprise a shell made of a transparent dielectric material and making contact with the transparent matrix, said shell (52) surrounding a core (53) of refractive index n3 of at most 1.15 at 550 nm, said core having a largest dimension called D3 in a range extending from 5 µm to 200 µm, the microparticles having a largest dimension called D' smaller than 2D₃.

2. The luminous glazing unit (100, 200, 300, 400, 500) as claimed in claim 1, **characterized in that** the degree of coverage of the microparticles (51) is at most 20% and preferably at most 10% and even at least 1%.

3. The luminous glazing unit (100, 200, 300, 400, 500) as claimed in one of the preceding claims, **characterized in that** the microparticles (51) are hollow and preferably the dielectric material of the shell (52) is mineral glass, silica or a metal oxide.

4. The luminous glazing unit (100, 200, 300, 400, 500) as claimed in one of the preceding claims, **characterized in that** the dielectric material of the shell (52) is mineral glass, silica or a metal oxide.

5. The luminous glazing unit (100, 200, 300, 400, 500) as claimed in one of the preceding claims, **characterized in that** said largest dimension D₃ is in the range extending from 20 µm to 100 µm.

6. The luminous glazing unit (100, 200, 300, 400, 500) as claimed in one of the preceding claims, **characterized in that** the scattering layer (5) includes a layer binding the microparticles made of a material chosen from an organic binder, in particular one based on acrylate, silicone, epoxy, silicone-epoxy or polyurethane, or a mineral binder such as a silica and/or metal oxide and/or the scattering layer (5) includes a PVB or EVA layer binding the microparticles.

7. The luminous glazing unit (100, 200, 300, 400, 500) as claimed in one of the preceding claims, **characterized in that** the scattering layer (5) is directly on the first face (11) or the second face (12) of the first glazing pane (1), and, defining the haze, called H₁, in the off state, of the first glazing pane and scattering layer together, H1 is at most 10% and preferably at most 5% and even at most 2%.

8. The luminous glazing unit (100, 200, 300, 400, 500) as claimed in one of the preceding claims, **characterized in that** the scattering layer (5) is directly on the first face (11) or the second face (12) of the first glazing pane (1), and, the image clarity, in the off state, of the first glazing pane and scattering layer together, is at least 90%.

9. The luminous glazing unit (100, 200, 300, 400, 500) as claimed in one of the preceding claims, **characterized in that** the light source includes a set of light-emitting diodes (4) on a PCB carrier.

10. The luminous glazing unit (400) as claimed in one of the preceding claims, **characterized in that** the light source, preferably diodes on a PCB carrier, is optically coupled to the first glazing pane, **in that** a layer of porous sol-gel silica of refractive index of at most 1.3 and even of at most 1.2 at 550 nm is on the second face of the first glazing pane, **in that** the scattering layer (5) is on the first face (11) or the side of the second face (12) of the first glazing pane (1) and, when the scattering layer is on the second-face side, the porous silica layer has one or more discontinuities and the scattering layer faces the one or more discontinuities, in particular on the second face and between the one or more discontinuities, and **in that** optionally the glazing module is a laminated glazing unit including said first glazing pane (1) made of preferably clear or even extra-clear mineral glass, and, on the side of the second face (12), a lamination interlayer (2) made of an optionally tinted preferably thermoplastic polymeric material, and a second glazing pane (1') made of mineral glass optionally including an absorbing and/or scattering layer called a decorative layer.

11. The glazing unit (200, 300, 400) as claimed in one of the preceding claims, **characterized in that** the glazing module is a laminated glazing unit including said first glazing pane (1) made of preferably clear or even extra-clear mineral glass, and including on the second-face (12) side a lamination interlayer (2) made of a preferably thermoplastic polymeric material, and a second glazing pane (1') made of preferably clear or even extra-clear mineral glass.

12. The luminous glazing unit (200, 300, 400) as claimed in one of claims 1 to 10, **characterized in that** the glazing module is a laminated glazing unit including said first glazing pane made of mineral glass, a lamination interlayer made of an in particular thermoplastic polymeric material and a second glazing pane made of mineral glass, and **in that** the microparticles are bound by the polymeric material forming the transparent matrix.

13. The luminous glazing unit (200, 300, 400) as claimed in one of claims 10 to 12, **characterized in that** the lamination interlayer is a PVB or an EVA.

14. The luminous glazing unit (200, 300, 400) as claimed in one of the preceding claims, **characterized in that** it forms an architectural glazing unit or a glazing unit used in furnishings or a means of public transport.

15. The luminous glazing unit (500) as claimed in one of claims 1 to 14, **characterized in that** it forms an insulating glazing unit that includes an additional glazing pane with third and fourth main faces, the third face, the innermost, being spaced apart from the glazing module, preferably forming a single glazing unit, by a gas-filled cavity, a framing first polymeric seal being arranged on the periphery of the third face and making contact with the glazing module and preferably the first face or the second face of the first glazing pane.

16. The luminous glazing unit (500) as claimed in the preceding claim, **characterized in that** it forms a side window of a train, tram or a subway train, a door of a refrigerated appliance, a window and in particular a skylight, or a glazed door.

17. The luminous glazing unit (100) as claimed in one of claims 1 to 10, **characterized in that** it forms a planar and tempered, clear or extra-clear single glazing unit, the first glazing pane thus being planar and tempered and clear or extra-clear.

18. The luminous glazing unit (100, 200, 300, 400, 500) as claimed in one of the preceding claims, **characterized in that** it includes a profile for mounting the glazing unit, the light source being in the volume between the mounting profile and the edge face of the glazing module, the profile including a web facing the edge face of the glazing module, preferably a first flange on one of the external main faces of the luminous glazing unit, and preferably a second flange on at least the other of the external main faces of the luminous glazing unit.

19. The luminous glazing unit (500) as claimed in one of the preceding claims, **characterized in that** the light source includes a set of light-emitting diodes (4) on a PCB carrier and **in that** it includes a profile bearing the PCB carrier in the volume between the mounting profile and the edge face of the glazing module.
